# EUROPEAN PATENT APPLICATION

(11) **EP 4 814 676 A1**
(43) Date of publication of application: **30.09.2026**
(21) Application number: 24904266.4
(22) Date of filing: 11.12.2024
(51) Int. Cl.: G06F 3/0484, G06F 3/04815, G06F 1/16, G06F 3/041, G06F 9/451, G06F 3/04883

(54) **WEARABLE ELECTRONIC DEVICE AND METHOD FOR DISPLAYING GUI**

(30) Priority: 12.12.2023 KR 20230179675; 07.02.2024 KR 20240018782
(71) Applicant: Samsung Electronics Co., Ltd., Suwon-si, Gyeonggi-do 16677 (KR)
(72) Inventor: LEE, Junho, Suwon-si Gyeonggi-do 16677 (KR); KIM, Daeho, Suwon-si Gyeonggi-do 16677 (KR); KIM, Sangheon, Suwon-si Gyeonggi-do 16677 (KR); KIM, Youngjung, Suwon-si Gyeonggi-do 16677 (KR); KIM, Jeongseob, Suwon-si Gyeonggi-do 16677 (KR); YOUN, Youngjune, Suwon-si Gyeonggi-do 16677 (KR); LIM, Yeunwook, Suwon-si Gyeonggi-do 16677 (KR)
(74) Representative: HGF
(86) International application number: PCT/KR2024/020257
(87) International publication number: WO 2025/127701

(57) **Abstract**

Provided are a wearable electronic device and a method for displaying a GUI. The method for displaying a GUI by a wearable electronic device may comprise: an operation of displaying a first GUI on a main display area of the wearable electronic device; an operation of receiving a first user input of multi-touching a sub-display area corresponding to a band part of the wearable electronic device; an operation of receiving a second user input of moving the multi-touch while the multi-touch is maintained; an operation of determining whether the wearable electronic device is rotated while the second user input is received; and an operation of changing the display of the first GUI when it is determined that the wearable electronic device is rotated.

## Description

### [Technical Field]

The disclosure relates to a wearable electronic device and a method for displaying a graphical user interface (GUI), and more particularly, to a wearable electronic device and a method for displaying a GUI based on a multi-touch.

### [Background Art]

As communication technology and flexible display technology develop, various kinds of wearable electronic devices including flexible displays are being provided. In particular, if a wearable electronic device is a smart watch, a relatively small screen may be provided by the wearable electronic device, making it difficult for users to operate the wearable electronic device effectively, and there is a demand for technology for change of watch face screens, customizing of watch bands, and utilization of displays provided as bands. In addition, it is necessary to extend displays of wearable electronic devices and provide them to users, and it is also necessary to effectively provide GUIs to users based on user input.

### [Disclosure of Invention]

### [Solution to Problem]

According to an embodiment, a method for displaying a GUI by a wearable electronic device may include: displaying a first GUI on a main display area of the wearable electronic device (for example, operation 400); receiving a first user input comprising a multi-touch on a sub-display area corresponding to a band portion of the wearable electronic device (for example, operation 410); receiving a second user input to move the multi-touch while the multi-touch is being maintained (for example, operation 420); determining whether the wearable electronic device is rotated while the second user input is being received; when it is determined that the wearable electronic device is rotated, changing the display of the first GUI (for example, operation 450). Furthermore, the method may include, when it is determined that the wearable electronic device is not rotated, displaying a second GUI pre-set in relation to the first GUI on the sub-display area (for example, operation 440).

According to an embodiment, a wearable electronic device may include: one or more displays (for example, 1060, 2360) configured to provide a main display area and a sub-display area; one or more sensors (for example, 1076, 2376); a memory (for example, 1030, 1076) configured to store instructions; and one or more processors (for example, 1020, 2320), and, when executed by the one or more processors, the instructions stored in the memory may cause the wearable electronic device to: display a first GUI on the main display area of the wearable electronic device; receive a first user input comprising a multi-touch on the sub-display area corresponding to a band portion of the wearable electronic device; receive a second user input to move the multi-touch while the multi-touch is being maintained; control the one or more sensors to determine whether the wearable electronic device is rotated while the second user input is being received; and, when it is determined that the wearable electronic device is rotated, change the display of the first GUI. Furthermore, when it is determined that the wearable electronic device is not rotated, the instructions may cause the wearable electronic device to display a second GUI pre-set in relation to the first GUI on the sub-display area.

According to an embodiment, there may be provided a computer-readable recording medium which has a program recorded thereon to execute a method for displaying a GUI, the method including: displaying a first GUI on a main display area of the wearable electronic device; receiving a first user input comprising a multi-touch on a sub-display area corresponding to a band portion of the wearable electronic device; receiving a second user input to move the multi-touch while the multi-touch is being maintained; determining whether the wearable electronic device is rotated while the second user input is being received; when it is determined that the wearable electronic device is rotated, changing the display of the first GUI; and when it is determined that the wearable electronic device is not rotated, displaying a second GUI pre-set in relation to the first GUI on the sub-display area.

According to an embodiment, a method for displaying a GUI by a wearable electronic device may include: displaying a first GUI on a main display area of the wearable electronic device (for example, operation 400); receiving a first user input comprising a multi-touch on a sub-display area of the wearable electronic device (for example, operation 410); receiving a second user input to move the multi-touch while the multi-touch is being maintained (for example, operation 420); determining whether the wearable electronic device is rotated while the second user input is being received; and changing the display of the first GUI based on whether the wearable electronic device is rotated (for example, operation 450).

### [Brief Description of Drawings]

FIG. 1 is a view to explain an overview of change of a GUI displayed on a wearable electronic device according to a user input on the wearable electronic device according to an embodiment.
FIG. 2 is a view to explain a main display area and a sub-display area of a wearable electronic device according to an embodiment.
FIG. 3 is a view to explain a main display area and a sub-display area of a wearable electronic device according to an embodiment.
FIG. 4 is a flowchart of a method for displaying a GUI on a wearable electronic device by the wearable electronic device according to a user input according to an embodiment.
FIG. 5 is a view illustrating an example of a user input to move a multi-touch on a wearable electronic device according to an embodiment.
FIG. 6 is a view illustrating an example of a user input to move a part of a multi-touch on a wearable electronic device according to an embodiment.
FIG. 7 is a view illustrating an example of a user input to move a part of a multi-touch on a wearable electronic device according to an embodiment.
FIG. 8 is a view illustrating an example of a user input to rotate a wearable electronic device according to an embodiment.
FIG. 9 is a view illustrating an example where a multi-touch on a wearable electronic device is moved according to a user input to rotate the wearable electronic device according to an embodiment.
FIG. 10 is a view illustrating an example where a multi-touch on a wearable electronic device is maintained according to a user input to rotate the wearable electronic device according to an embodiment.
FIG. 11 is a flowchart of a method for displaying a second GUI related to a first GUI by a wearable electronic device according to a user input to move a multi-touch according to an embodiment.
FIG. 12 is a flowchart of a method for changing the display of a first GUI by a wearable electronic device according to a user input to rotate the wearable electronic device according to an embodiment.
FIG. 13 is a flowchart of a method for displaying a GUI as a multi-touch on a wearable electronic device is released according to an embodiment.
FIG. 14 is a view illustrating an example where, when a notification is generated in a wearable electronic device according to an embodiment, a first GUI of a watch application is changed to a second GUI of an application where the notification is generated as a multi-touch on a sub-display area is moved.
FIG. 15 is a view illustrating an example where a first GUI of a watch application is changed as a multi-touch on a sub-display area of a wearable electronic device is moved according to an embodiment.
FIG. 16 is a view illustrating an example where a second GUI containing weather information is additionally displayed as a multi-touch on a sub-display area of a wearable electronic device is moved according to an embodiment.
FIG. 17 is a view illustrating an example where a second GUI containing detailed weather information is additionally displayed for a first GUI of a weather application as a multi-touch on a sub-display area of a wearable electronic device is moved according to an embodiment.
FIG. 18 is a view illustrating an example where a second GUI containing detailed schedule information is additionally displayed for a first GUI of a schedule application as a multi-touch on a sub-display area of a wearable electronic device is moved according to an embodiment.
FIG. 19 is a view illustrating an example where a first GUI of a watch application is changed as a multi-touch on a sub-display area of a wearable electronic device is moved and the wearable electronic device is rotated, and the changed first GUI is maintained according to an embodiment.
FIG. 20 is a view illustrating an example where a first GUI displayed on a wearable electronic device is rotated as a multi-touch on a sub-display area of the wearable electronic device is moved according to an embodiment.
FIG. 21 is a view illustrating an example where a first GUI displayed on a wearable electronic device is rotated as a multi-touch on a sub-display area of the wearable electronic device is moved and the wearable electronic device is rotated, and the rotated first GUI is fixed according to an embodiment.
FIG. 22 is a view illustrating an example where, when a notification is generated in a wearable electronic device according to an embodiment, a GUI of an application where the notification is generated is displayed on a sub-display area and fixed as a multi-touch on the sub-display area is moved due to the rotation of the wearable electronic device.
FIG. 23 is a block diagram of a wearable electronic device according to an embodiment.
FIG. 24 is a block diagram of an electronic device in a network environment according to various embodiments.

Regarding the explanation of drawings, the same or similar reference numerals may be used for the same or similar components.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein. In addition, in the drawings, parts having nothing to do with the descriptions are omitted for the clear description of the disclosure, and throughout the specification, the same or like reference numerals are used for the same or like elements.

The terms used in the disclosure are described as general terms currently used considering the functions mentioned in the disclosure, but may refer to various other terms according to the intent of those skilled in the art, precedent, the emergence of new technologies. Accordingly, the terms used in the disclosure should not be interpreted solely based on their names and should be interpreted based on the meaning of the terms and the whole context of the disclosure.

In addition, such terms as "1st" and "2nd," or "first" and "second" may be used to explain various components, but the components should not be limited by such terms. These terms may only be used for the purpose of distinguishing one component from other components.

Throughout the specification, it is to be understood that if an element is referred to as "connected with/to" another element, it means that the element may be "directly connected" with another element or may be "electrically connected" with another element via an intervening element therebetween. It will be further understood that when a certain portion is referred to as "including" a certain element, it means that the certain portion does not exclude other components and may further include other components unless the context clearly indicates otherwise.

The phrase "in an embodiment" used in the disclosure does not necessarily indicate the same embodiment.

An embodiment of the disclosure may be represented by functional block configurations and various processing steps. Some or all of the functional blocks may be implemented by various numbers of hardware and/or software configurations that perform specific functions. For example, the functional blocks of the disclosure may be implemented by one or more microprocessors or may be implemented by circuit configurations for predetermined functions. In addition, for example, the functional blocks of the disclosure may be implemented by various programming or scripting languages. The functional blocks may be implemented by an algorithm that is executed in one or more processors. The disclosure may employ related-art technologies for electronic configuration, signal processing, and/or data processing. Such terms as "mechanism", "element", "means", and "configuration" may be broadly used and are not limited to mechanical and physical configurations.

In addition, connecting lines or connecting members among components shown in the drawings are only examples of functional connection and/or physical or circuitry connections. In an actual device, connections among components may be represented by a variety of alternative or additional functional connection, physical connection, or circuit connections.

Hereinafter, the disclosure will be described in detail with reference to the accompanying drawings.

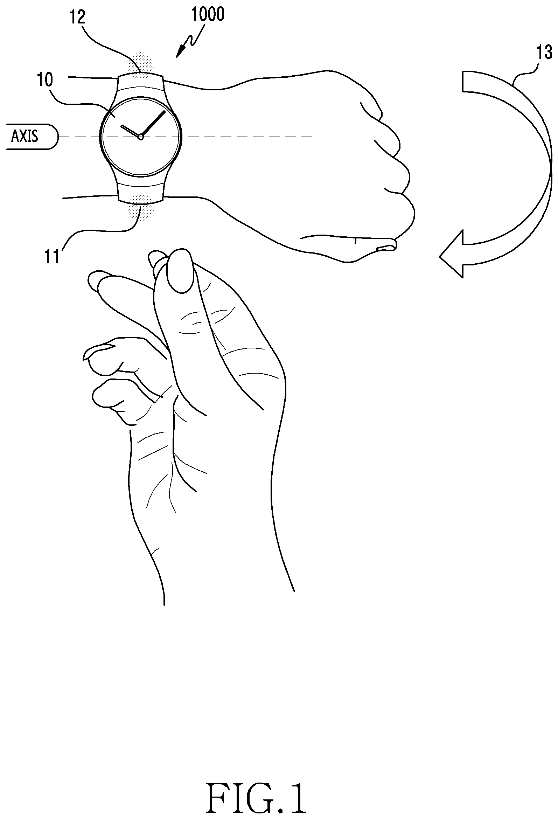

FIG. 1 is a view to explain an overview of change of a GUI displayed on a wearable electronic device according to a user input on the wearable electronic device according to an embodiment.

Referring to FIG. 1, the wearable electronic device 1000 may display a first graphical user interface (GUI) on a main display area 10 of the wearable electronic device 1000 while worn on user's wrist. The first GUI may be a GUI that is provided by an application installed in the wearable electronic device 1000.

The wearable electronic device 1000 may receive user's touch input on a band portion of the wearable electronic device 1000 while displaying the first GUI on the main display area 10 of the wearable electronic device 1000. The band portion of the wearable electronic device 1000 may include a sub-display area, and for example, the wearable electronic device 1000 may receive a multi-touch input including a first touch on a first portion 11 of the sub-display area and a second touch on a second portion 12 of the sub-display area. In addition, the user may move at least one of the first touch and the second touch, and the wearable electronic device 1000 may detect the movement of at least one of the first touch and the second touch.

In addition, as user's wrist is rotated (13), the wearable electronic device 1000 may detect the rotation about an axis corresponding to user's forearm.

The wearable electronic device 1000 may change the first GUI displayed on the wearable electronic device 1000, based on at least one of the movement of the multi-touch input or the rotation of the wearable electronic device 1000. For example, the wearable electronic device 1000 may additionally display a second GUI related to the first GUI or may change the display of the first GUI.

The wearable electronic device 1000 may be an electronic device that is worn by a user, and for example, may be an electronic device that is worn on user's body or clothing. For example, the wearable electronic device 1000 may be a smart watch, a wearable computer, smart glasses, and a smart wear. However, this should not be considered as limiting. The wearable electronic device 1000 may include all kinds of devices that are worn by users and are able to provide visual feedback to users.

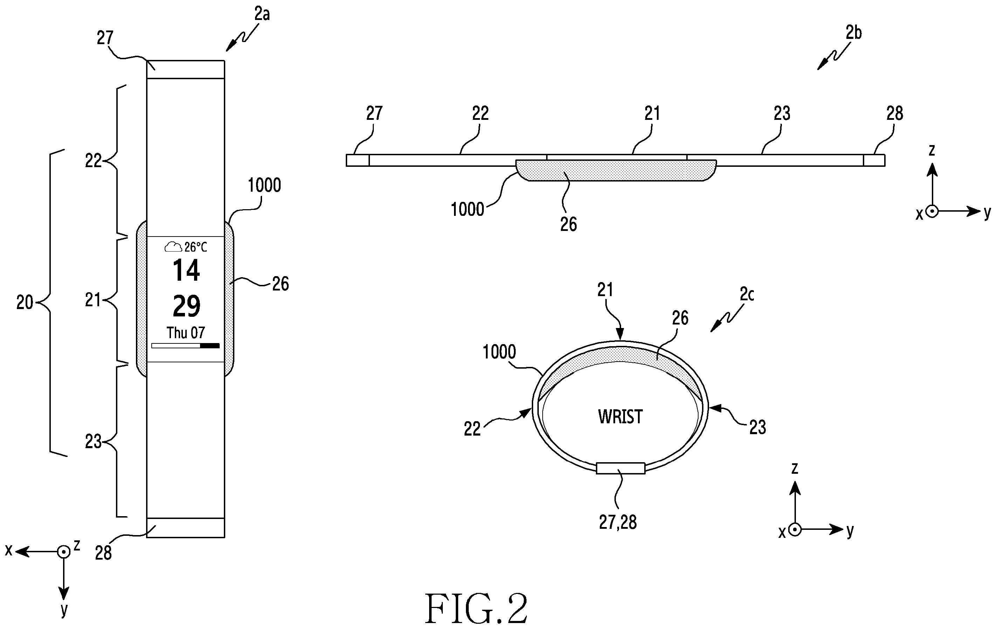

FIG. 2 is a view to explain a main display area and a sub-display area of a wearable electronic device according to an embodiment.

Identification number 2a of FIG. 2 is a view of the wearable electronic device 1000 as viewed from the front, identification number 2b is a view of the wearable electronic device 1000 as viewed from the side, and identification number 2c is a view illustrating a side of the wearable electronic device 1000 worn by a user.

Referring to FIG. 2, the wearable electronic device 1000 may include at least one display 20, a body portion 26, and fastening portions 27, 28.

The at least one display 20 may include a main display area 21 and sub-display areas 22, 23. The main display area 21 and the sub-display areas 22, 23 may be implemented as a single display, but is not limited hereto. For example, the main display area 21 and the sub-display areas 22, 23 may be implemented by two or more displays.

In addition, the at least one display 20 may be a flexible display. For example, when the main display area 21 and the sub-display areas 22, 23 are implemented as a single display, the main display area 21 and the sub-display areas 22, 23 may be provided by a single flexible display. For example, when the main display area 21 and the sub-display areas 22, 23 are implemented by two or more displays, the sub-display areas 22, 23 may be provided by a flexible display.

The main display area 21 may be a display area on which a GUI provided by an application of the wearable electronic device 1000 is mainly displayed. The main display area 21 may be an area that is set to display a watch face screen and an execution screen of an application by default. The main display area 21 may be an area that corresponds to the body portion 26 of the wearable electronic device 1000, and for example, at least a part of the body portion 26 of the wearable electronic device 1000 may be disposed under the main display area 21. For example, when the wearable electronic device 1000 is disposed to expose the main display area 21 of the wearable electronic device 1000 toward the +z-axis direction with reference to three axes (x, y, z), at least a part of the body portion 26 may be disposed under the main display area 21 with reference to the z-axis (for example, disposed in the -z-axis direction).

The sub-display areas 22, 23 may be display areas on which a GUI provided by an application of the wearable electronic device 1000 is complementarily displayed. For example, additional information provided by the application may be displayed on the sub-display areas 22, 23. For example, the GUI displayed on the main display area 21 may be moved to the sub-display areas 22, 23. For example, the sub-display areas 22, 23 may correspond to band portions of a smart watch, but are not limited hereto.

The body portion 26 may have electronic components necessary for executing operations of the wearable electronic device 1000 mounted therein.

The fastening portions 27, 28 may be formed at distal ends of the sub-display areas 22, 23 to be fastened to each other and to allow the wearable electronic device 1000 to be worn on user's body (for example, wrist).

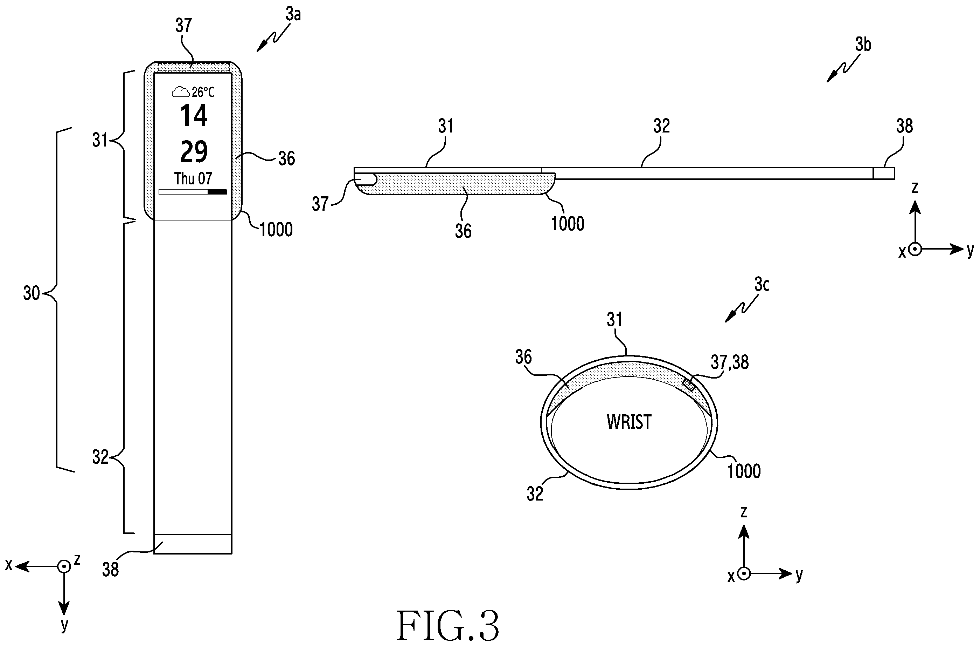

FIG. 3 is a view to explain a main display area and a sub-display area of a wearable electronic device according to an embodiment.

Identification number 3a of FIG. 3 is a view of the wearable electronic device 1000 as viewed from the front, identification number 3b is a view of the wearable electronic device 1000 as viewed from the side, and identification number 3c is a view illustrating a side of the wearable electronic device 1000 worn by a user.

Referring to FIG. 3, the wearable electronic device 1000 may include at least one display 30, a body portion 36, and fastening portions 37, 38.

The at least one display 30 may include a main display area 31 and a sub-display area 32. The main display area 31 and the sub-display area 32 may be implemented as a single display, but is not limited hereto. For example, the main display area 31 and the sub-display area 32 may be implemented by two displays.

In addition, the at least one display 30 may be a flexible display. For example, when the main display area 31 and the sub-display area 32 are implemented as a single display, the main display area 31 and the sub-display area 32 may be provided by a single flexible display. For example, when the main display area 31 and the sub-display area 32 are implemented by two or more displays, the sub-display area 32 may be provided by a flexible display.

The main display area 31 may be a display area on which a GUI provided by an application of the wearable electronic device 1000 is mainly displayed. The main display area 31 may be an area that is set to display a watch face screen and an execution screen of an application by default. The main display area 31 may be an area that corresponds to the body portion 36 of the wearable electronic device 1000, and for example, at least a part of the body portion 36 of the wearable electronic device 1000 may be disposed under the main display area 31. For example, when the wearable electronic device 1000 is disposed to expose the main display area 31 of the wearable electronic device 1000 toward the +z-axis direction with reference to three axes (x, y, z), at least a part of the body portion 36 may be disposed under the main display area 31 with reference to the z-axis (for example, disposed in the -z-axis direction).

The sub-display area 32 may be a display area on which a GUI provided by an application of the wearable electronic device 1000 is complementarily displayed. For example, additional information provided by the application may be displayed on the sub-display area 32. For example, at least a part of the GUI displayed on the main display area 31 may be moved to the sub-display area 32. For example, the sub-display area 32 may correspond to a band portion of a smart watch, but is not limited hereto.

The body portion 36 may have electronic components necessary for executing operations of the wearable electronic device 1000 mounted therein.

The fastening portions 37, 38 may be formed at one end of the body portion 36 and a distal end of the sub-display area 32 to be fastened to each other and to allow the wearable electronic device 1000 to be worn on user's body (for example, wrist).

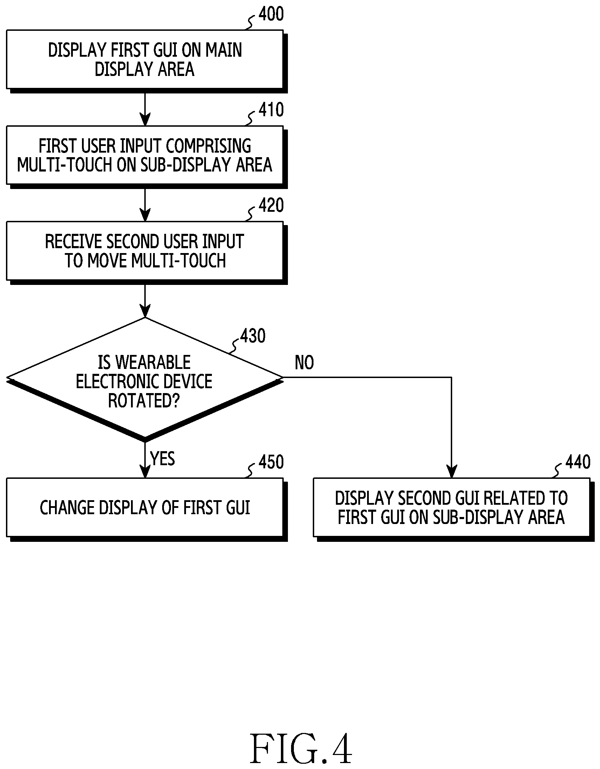

FIG. 4 is a flowchart of a method for displaying a GUI on a wearable electronic device by the wearable electronic device according to a user input according to an embodiment.

In operation 400, the wearable electronic device 1000 may display a first GUI on a main display area (for example, the main display area 21 of FIG. 2, or the main display area 31 of FIG. 3). The wearable electronic device 1000 may display the first GUI that is provided by an application running in the wearable electronic device 1000 on the main display area. The application running in the wearable electronic device 1000 may include, for example, a watch application, a weather application, a schedule application, and a health application, but is not limited hereto. The application may include all kinds of applications executable by the wearable electronic device 1000.

In operation 410, the wearable electronic device 1000 may receive a first user input comprising a multi-touch on a sub-display area (for example, the sub-display areas 22, 23 of FIG. 2, or the sub-display area 32 of FIG. 3). The wearable electronic device 1000 may receive the first user input to touch a first portion and a second portion of the sub-display area simultaneously. The first user input may be a multi-touch input including a first touch on the first portion of the sub-display area and a second touch on the second portion of the sub-display area.

According to an embodiment, the first portion of the sub-display area and the second portion of the sub-display area may be portions that are spaced apart from each other by the main display area. For example, the first portion of the sub-display area may be a portion that is adjacent to a lower end of the main display area, and the second portion of the sub-display area may be a portion that is adjacent to an upper end of the main display area.

In operation 420, the wearable electronic device 1000 may receive a second user input to move the multi-touch. When the first user input is the multi-touch input including the first touch on the first portion of the sub-display area and the second touch on the second portion of the sub-display area, the wearable electronic device 1000 may receive the second user input to move at least one of the first touch or the second touch.

For example, the wearable electronic device 1000 may receive the second user input to move the first touch and the second touch. In this case, the wearable electronic device 1000 may acquire information on the movement of the first touch and the second touch. For example, the wearable electronic device 1000 may identify information on a starting position of the movement of the first touch, a movement direction of the first touch, a movement distance of the first touch, a starting position of the movement of the second touch, a movement direction of the second touch, a movement distance of the second touch.

For example, the wearable electronic device 1000 may receive the second user input to move the first touch out of the first touch and the second touch. In this case, the wearable electronic device 1000 may acquire information on the movement of the first touch. For example, the wearable electronic device 1000 may identify information on the starting position of the movement of the first touch, the movement direction of the first touch, and the movement distance of the first touch.

For example, the wearable electronic device 1000 may receive the second user input to move the second touch out of the first touch and the second touch. In this case, the wearable electronic device 1000 may acquire information on the movement of the second touch. For example, the wearable electronic device 1000 may identify information on the starting position of the movement of the second touch, the movement direction of the second touch, and the movement distance of the second touch.

In the above, it is illustrated that the first user input and the second user input are separate inputs for the convenience of explanation, but this should not be considered as limiting. The first user input and the second user input may be a single user input. For example, the wearable electronic device 1000 may recognize a multi-touch and an input to move the multi-touch as a single user input.

In operation 430, the wearable electronic device 1000 may determine whether the wearable electronic device 1000 is rotated. For example, when user's wrist wearing the wearable electronic device 1000 is rotated, the wearable electronic device 1000 may be rotated with reference to an axis corresponding to user's forearm. In this case, the wearable electronic device 1000 may detect the rotation of the wearable electronic device 1000 using at least one sensor in the wearable electronic device 1000, thereby acquiring information on the rotation of the wearable electronic device 1000. For example, the wearable electronic device 1000 may acquire information on a rotation direction and a rotation angle of the wearable electronic device 1000.

According to an embodiment, the wearable electronic device 1000 may determine whether the wearable electronic device 1000 is rotated while the multi-touch is moved. The wearable electronic device 1000 may determine whether the rotation of the wearable electronic device 1000 is detected while detecting the movement of the multi-touch.

According to an embodiment, the wearable electronic device 1000 may compare the information on the movement of the first touch and the second touch included in the multi-touch, and the information on the rotation of the wearable electronic device 1000. For example, the wearable electronic device 1000 may identify whether the movement of the multi-touch is caused by the rotation of the wearable electronic device 1000, or the movement of the multi-touch is unrelated to the rotation of the wearable electronic device 1000, based on the comparison.

According to an embodiment, as it is determined that the wearable electronic device 1000 is not rotated, the wearable electronic device 1000 may display a second GUI related to the first GUI on the sub-display area in operation 440. As it is determined that the wearable electronic device 1000 is not rotated while the second user input to move the multi-touch is being received, the wearable electronic device 1000 may display the pre-set second GUI on the sub-display area according to the movement of the multi-touch.

According to an embodiment, the second GUI may be a GUI that is provided by the application providing the first GUI, and the second GUI related to the first GUI may be a pre-set GUI. In this case, the wearable electronic device 1000 may identify the second GUI related to the first GUI, by considering information on an identification value of the first GUI, an identification value of the application providing the first GUI, and the input to move the multi-touch. However, this should not be considered as limiting. The second GUI may be a GUI that is provided by a different application from the application providing the first GUI.

According to an embodiment, the wearable electronic device 1000 may display the second GUI on a portion of the sub-display area that is adjacent to the main display area. For example, the wearable electronic device 1000 may additionally display the second GUI on a portion of the sub-display area that is adjacent to an upper end of the main display area. For example, the wearable electronic device 1000 may additionally display the second GUI on a portion of the sub-display area that is adjacent to a lower end of the main display area.

In the above, it is illustrated that the wearable electronic device 1000 displays the second GUI on the sub-display area, but this should not be considered as limiting. For example, the wearable electronic device 1000 may display the second GUI by overlapping the second GUI over the first GUI displayed on the main display area. In addition, for example, the wearable electronic device 1000 may display the second GUI over the main display area and the sub-display area.

In the above, it is illustrated that the wearable electronic device 1000 additionally displays the second GUI, but this should not be considered as limiting. For example, the wearable electronic device 1000 may display the second GUI on behalf of the first GUI. In this case, the wearable electronic device 1000 may remove the first GUI and display the second GUI on the main display area.

In the above, it is illustrated that the wearable electronic device 1000 displays the second GUI, but this should not be considered as limiting. The wearable electronic device 1000 may extend the first GUI and may display the extended first GUI on the main display area and at least a part of the sub-display area. In this case, the extended first GUI may contain more information than the first GUI before extension.

According to an embodiment, as it is determined that the wearable electronic device 1000 is rotated, the wearable electronic device 1000 may change the display of the first GUI in operation 450. As it is determined that the wearable electronic device 1000 is rotated while the second user input to move the multi-touch is being received, the wearable electronic device 1000 may change the display of the first GUI according to the rotation of the wearable electronic device 1000.

For example, the wearable electronic device 1000 may rotate the first GUI within the main display area and display the same. In this case, the wearable electronic device 1000 may determine a rotation angle of the first GUI according to the rotation direction and the rotation angle of the wearable electronic device 1000.

For example, the wearable electronic device 1000 may move the display position of the first GUI from the main display area to the sub-display area. In this case, the wearable electronic device 1000 may determine a movement direction and a movement distance of the first GUI according to the rotation direction and the rotation angle of the wearable electronic device 1000.

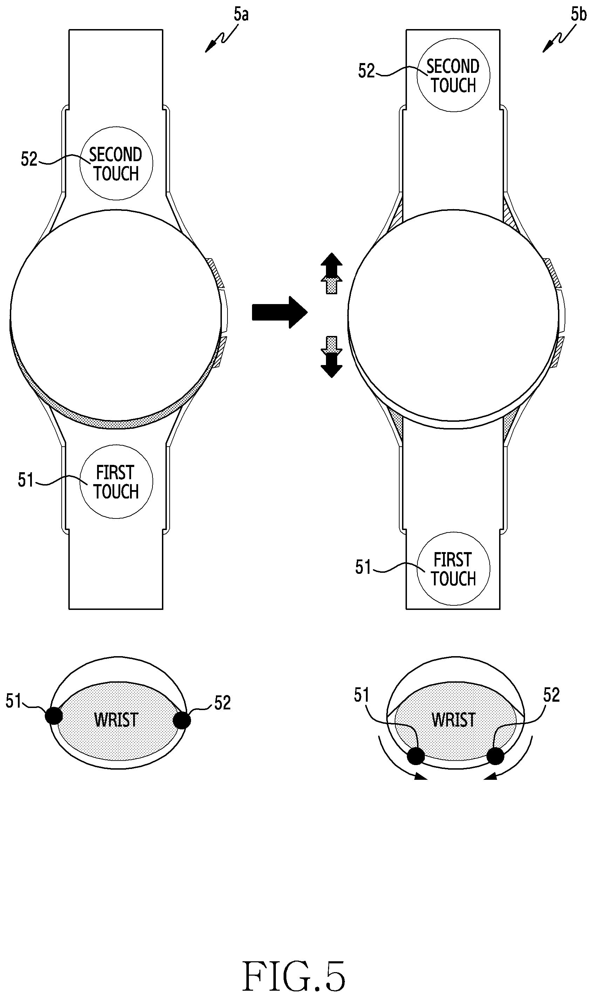

FIG. 5 is a view illustrating an example of a user input to move a multi-touch on a wearable electronic device according to an embodiment.

Referring to identification number 5a of FIG. 5, the wearable electronic device 1000 may receive a multi-touch input including a first touch 51 and a second touch 52 on sub-display areas.

Referring to identification number 5b of FIG. 5, a user may move the first touch 51 and the second touch 52 together while maintaining the touch state of the first touch 51 and the second touch 52. Accordingly, the wearable electronic device 1000 may detect a starting position of the movement of the first touch 51, a movement direction of the first touch 51, a movement distance of the first touch 51, a starting position of the movement of the second touch 52, a movement direction of the second touch 52, and a movement distance of the second touch 52.

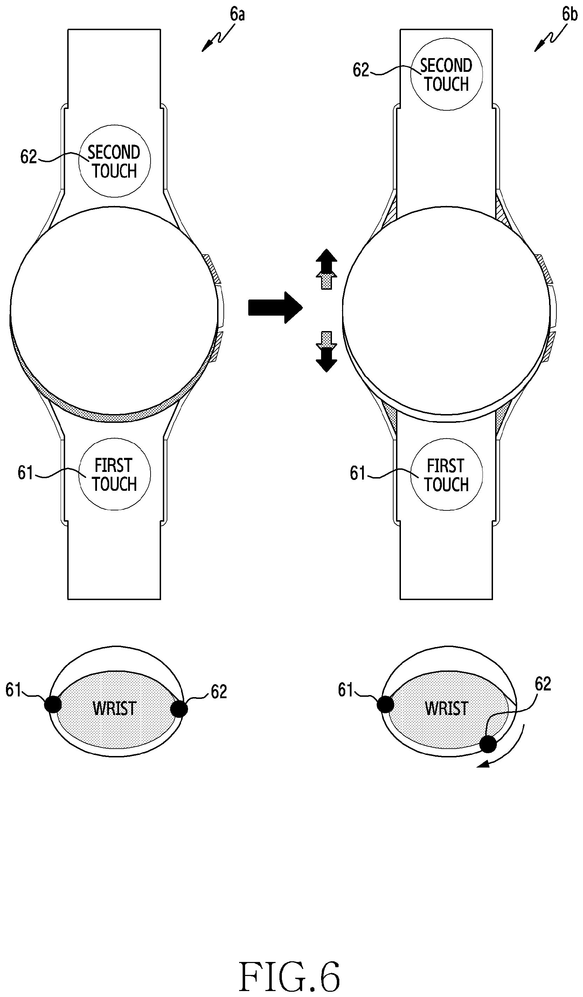

FIG. 6 is a view illustrating an example of a user input to move a part of a multi-touch on a wearable electronic device according to an embodiment.

Referring to identification number 6a of FIG. 6, the wearable electronic device 1000 may receive a multi-touch input including a first touch 61 and a second touch 62 on sub-display areas.

Referring to identification number 6b of FIG. 6, a user may move only the second touch 62 out of the first touch 61 and the second touch 62 while maintaining the touch state of the first touch 61 and the second touch 62. Accordingly, the wearable electronic device 1000 may detect a touch position of the first touch 61, a starting position of the movement of the second touch 62, a movement direction of the second touch 62, and a movement distance of the second touch 62.

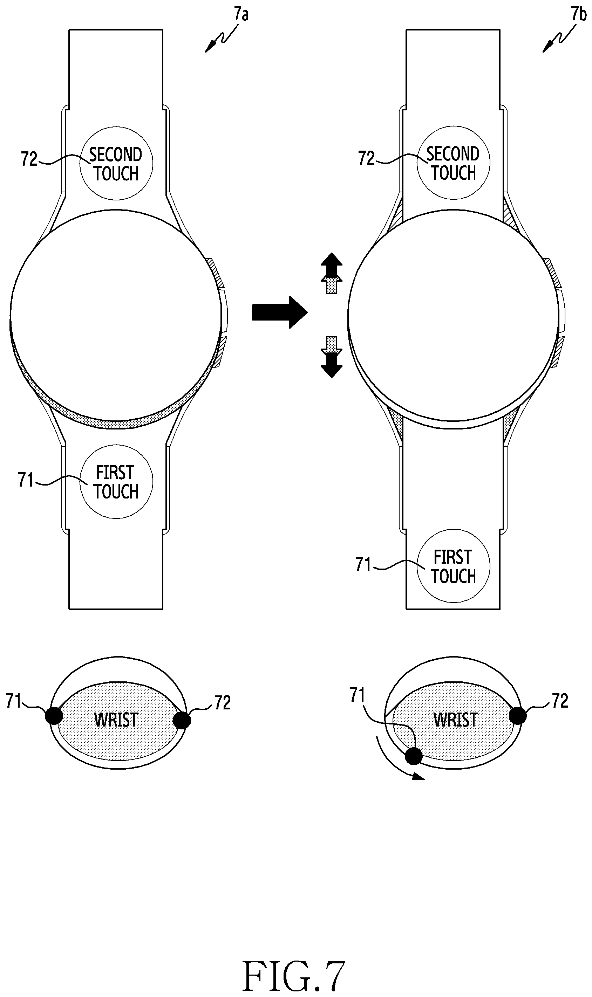

FIG. 7 is a view illustrating an example of a user input to move a part of a multi-touch on a wearable electronic device according to an embodiment.

Referring to identification number 7a of FIG. 7, the wearable electronic device 1000 may receive a multi-touch input including a first touch 71 and a second touch 72 on sub-display areas.

Referring to identification number 7b of FIG. 7, a user may move only the first touch 71 out of the first touch 71 and the second touch 72 while maintaining the touch state of the first touch 71 and the second touch 72. Accordingly, the wearable electronic device 1000 may detect a starting position of the movement of the first touch 71, a movement direction of the first touch 71, a movement distance of the first touch 71, and a touch position of the second touch 72.

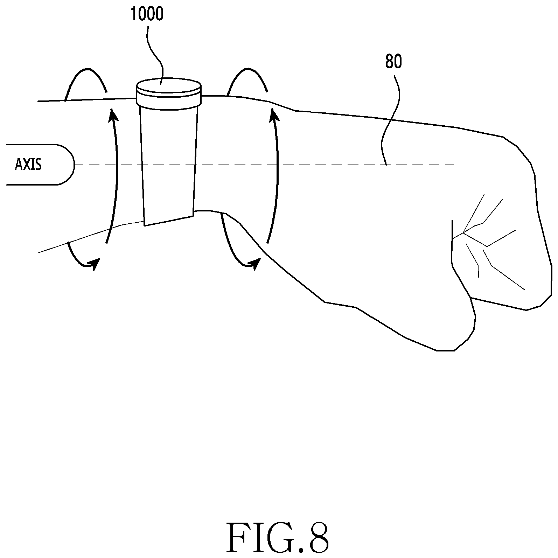

FIG. 8 is a view illustrating an example of a user input to rotate a wearable electronic device according to an embodiment.

Referring to FIG. 8, the wearable electronic device 1000 may be worn on user's wrist. As the user's wrist wearing the wearable electronic device 1000 is rotated, the wearable electronic device 1000 may be rotated with reference to an axis 80 of a direction that the user's forearm is pointing. The wearable electronic device 1000 may be rotated with reference to the axis 80 in the clockwise direction or counter clockwise direction. Accordingly, the wearable electronic device 1000 may acquire information on a rotation direction and a rotation angle of the wearable electronic device 1000.

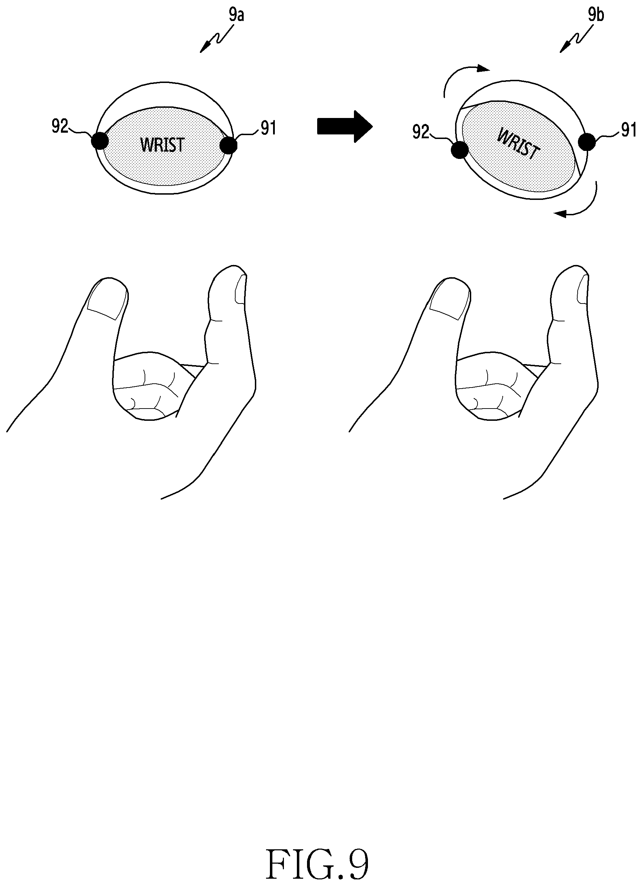

FIG. 9 is a view illustrating an example where a multi-touch on a wearable electronic device is moved according to a user input to rotate the wearable electronic device according to an embodiment.

Referring to identification number 9a of FIG. 9, the wearable electronic device 1000 may receive a first touch 91 and a second touch 92 on the wearable electronic device 1000.

Referring to identification number 9b of FIG. 9, the wearable electronic device 1000 may be rotated while the touch state of the first touch 91 and the second touch 92 on the wearable electronic device 1000 is being maintained. As the wearable electronic device 1000 is rotated, the positions of the first touch 91 and the second touch 92 on the wearable electronic device 1000 may be moved.

For example, the wearable electronic device 1000 may be rotated by the user rotating user's wrist while inputting the first touch 91 and the second touch 92 with user's fingers.

For example, the user may touch the wearable electronic device 1000 with fingers, so that the fingers are moved on the wearable electronic device 1000 due to rotation of the wearable electronic device 1000. In this case, as the wearable electronic device 1000 is rotated, the positions of the first touch 91 and the second touch 92 may be moved on the wearable electronic device 1000 due to the rotation of the wearable electronic device 1000. In this case, the movement direction of the positions of the first touch 91 and the second touch 92 may be opposite to the rotation direction of the wearable electronic device 1000. Furthermore, the amount of movement of the positions of the first touch 91 and the second touch 92 may be determined by the amount of rotation of the wearable electronic device 1000.

Furthermore, the wearable electronic device 1000 may identify the rotation direction and the rotation angle of the wearable electronic device 1000, and may identify the movement direction and the movement distance of the first touch 91 and the second touch 92. The wearable electronic device 1000 may compare the rotation direction and the rotation angle of the wearable electronic device 1000 and the movement direction and the movement distance of the first touch 91 and the second touch 92. Based on a result of comparison, the wearable electronic device 1000 may identify whether the movement of the first touch 91 and the second touch 92 on the wearable electronic device 1000 is caused by the user operation of FIG. 9.

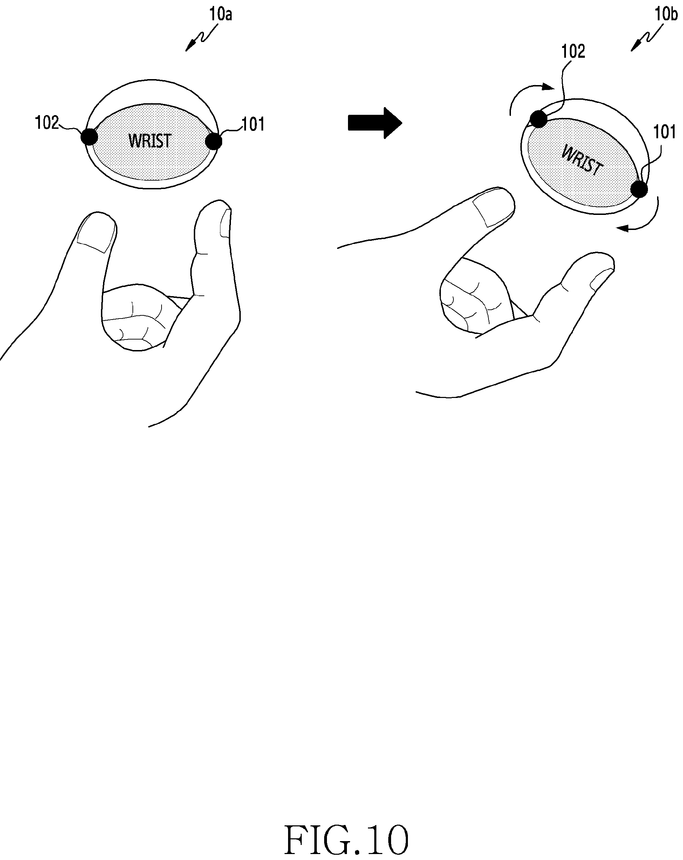

FIG. 10 is a view illustrating an example where a multi-touch on a wearable electronic device is maintained according to a user input to rotate the wearable electronic device according to an embodiment.

Referring to identification number 10a of FIG. 10, the wearable electronic device 1000 may receive a first touch 101 and a second touch 102 on the wearable electronic device 1000.

Referring to identification number 10b of FIG. 10, the wearable electronic device 1000 may be rotated while the touch state of the first touch 101 and the second touch 102 on the wearable electronic device 1000 is being maintained. The wearable electronic device 1000 may be rotated, but the positions of the first touch 101 and the second touch 102 on the wearable electronic device 1000 may not be moved.

For example, when the user inputs the first touch 101 and the second touch 102 with user's fingers, the wearable electronic device 1000 may be rotated by the user rotating user's wrist while maintaining the touch positions of the first touch 101 and the second touch 102.

For example, the user may touch the wearable electronic device 1000 with user's fingers so that the positions of the first touch 101 and the second touch 102 on the wearable electronic device 1000 are maintained even when the wearable electronic device 1000 is rotated. In this case, the positions of the first touch 101 and the second touch 102 on the wearable electronic device 1000 may be maintained due to the rotation of the wearable electronic device 1000 although the wearable electronic device 1000 is rotated.

Accordingly, the wearable electronic device 1000 may identify a rotation direction and a rotation angle of the wearable electronic device 100, and may identify that the positions of the first touch 101 and the second touch 102 are maintained.

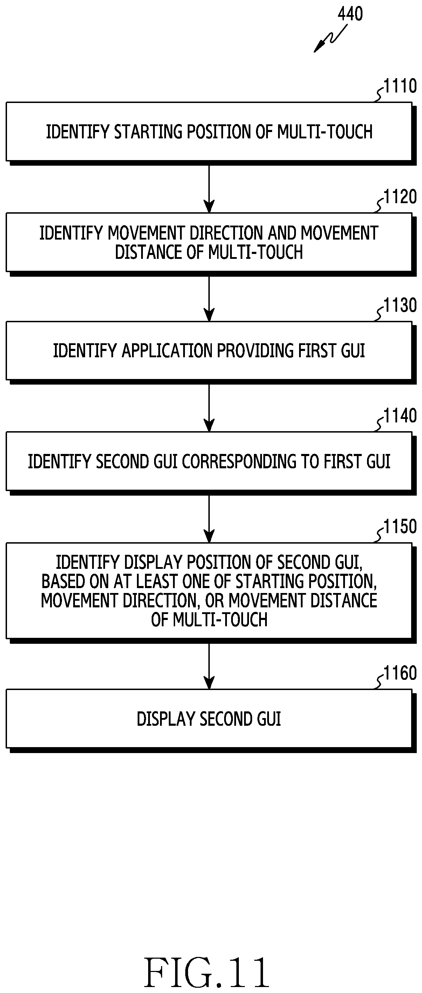

FIG. 11 is a flowchart of a method for displaying a second GUI related to a first GUI by a wearable electronic device according to a user input to move a multi-touch according to an embodiment.

Operations 1110 to 1160 of FIG. 11 may correspond to operation 440 of FIG. 4.

In operation 1110, the wearable electronic device 1000 may identify a starting position of the multi-touch. Before the first touch and the second touch on the sub-display areas are moved, the wearable electronic device 1000 may identify a starting position of the first touch and a starting position of the second touch on the sub-display areas. For example, the starting position of the first touch may be within a partial area of the sub-display area that is within a predetermined distance range from the lower end of the main display. For example, the starting position of the second touch may be within a partial area of the sub-display area that is within a predetermined distance range from the upper end of the main display.

In operation 1120, the wearable electronic device 1000 may identify a movement direction and a movement distance of the multi-touch. As the first touch and the second touch on the sub-display areas are moved, the wearable electronic device 1000 may identify movement directions and movement distances of the first touch and the second touch. For example, the movement direction of the first touch may include a direction toward the main display area and a direction away from the main display area, but is not limited hereto. For example, the movement direction of the second touch may include a direction toward the main display area and a direction away from the main display area, but is not limited hereto.

If only a part of the first touch and the second touch is moved, the electronic device 1000 may identify a movement direction and a movement distance of the moved touch.

In operation 1130, the wearable electronic device 1000 may identify an application providing the first GUI. The first GUI may be displayed on the main display area of the wearable electronic device 1000 by the application running in the wearable electronic device 1000, and the wearable electronic device 1000 may identify the application providing the first GUI.

In operation 1140, the wearable electronic device 1000 may identify the second GUI related to the first GUI. As the multi-touch is moved, the wearable electronic device 1000 may identify a pre-set second GUI based on at least one of the starting position, the movement direction, or the movement distance of the multi-touch. For example, the second GUI related to the first GUI may be pre-set according to the starting positions of the first touch and the second touch included in the multi-touch, the number of touches moved out of the first touch and the second touch, the movement direction of the first touch and/or the second touch, and the movement distance of the first touch and/or the second touch.

According to an embodiment, the second GUI related to the first GUI may be a GUI that is provided by the application providing the first GUI. Alternatively, the second GUI may be a GUI that is provided by a different application from the application providing the first GUI. Alternatively, the second GUI may be a GUI that includes a GUI provided by the application providing the first GUI and a GUI provided by a different application from the application providing the first GUI.

According to an embodiment, the wearable electronic device 1000 may identify the second GUI related to the first GUI by considering an identification value of the first GUI, an identification value of the application providing the first GUI, and information on the input to move the multi-touch (for example, the starting position, the movement direction, and the movement distance of the multi-touch).

For example, the first GUI may be a GUI that contains current local time information provided by a watch application, and the second GUI may be a GUI that contains time information of other regions provided by the watch application.

For example, the first GUI may be a GUI that contains weather information provided by a weather application, and the second GUI may be a GUI that contains weekly weather forecast information provided by the weather application.

For example, the first GUI may be a GUI that contains information related to user's health provided by a health application (for example, fluid intake, menstrual cycle, sleep patterns, stress, heart rate, food, daily activities, and blood oxygen levels), and the second GUI may be a GUI that contains additional information provided by the health application to guide user's health management.

For example, the first GUI may be a GUI that contains dual clock information (current local time and time of a designated different region) provided by the watch application, and the second GUI may be a GUI that contains at least one of battery state information, weather information or fine dust information provided by at least one other application.

For example, the first GUI may be a GUI that contains information on peripheral devices (for example, media devices, a battery, a buds controller) provided by an application providing an internet of things (IoT) service, and the second GUI may be a GUI that contains additional information related to peripheral devices.

For example, when the peripheral device connected to the wearable electronic device 1000 is a television (TV), the first GUI may contain an identification value of the TV, and the second GUI may be a GUI that contains remote controller information for controlling the TV and/or TV channel information. For example, the first GUI may be a GUI that contains contacts information provided by a contacts application, and the second GUI may contain additional information provided by the contacts application.

For example, the first GUI may be a GUI that contains a list of contacts registered as favorites or frequently used by the user, and the second GUI may be a GUI that contains recently used contacts, recent messages and/or recent call information.

For example, the first GUI may be a GUI that contains schedule information provided by a schedule application, and the second GUI may be a GUI that contains detailed information of a schedule provided by the schedule application.

For example, the first GUI may be a GUI that contains a map of a current location provided by a map application, and the second GUI may be a GUI that contains point of interest (POI) information (for example, oil stations, parking lots, school, department stores) around the current location.

For example, the first GUI may be a watch face screen of a watch application, and the second GUI may be a message screen provided by a message application.

In operation 1150, the wearable electronic device 1000 may identify a display position of the second GUI, based on at least one of the starting position, the movement direction, and the movement distance of the multi-touch, and in operation 1160, the wearable electronic device 1000 may display the second GUI. The wearable electronic device 1000 may identify a display position of the second GUI based on at least one of the starting position, the movement direction, or the movement distance of the multi-touch as the multi-touch is moved. For example, the display position of the second GUI may be pre-set according to the starting positions of the first touch and the second touch included in the multi-touch, the number of moved touches out of the first touch and the second touch, the movement direction of the first touch and/or second touch, and the movement distance of the first touch and/or the second touch.

According to an embodiment, the wearable electronic device 1000 may display the second GUI on a portion of the sub-display area that is adjacent to the main display area. For example, the wearable electronic device 1000 may additionally display the second GUI on a portion of the sub-display area that is adjacent to the upper end of the main display area. For example, the wearable electronic device 1000 may additionally display the second GUI on a portion of the sub-display area that is adjacent to the lower end of the main display area.

In the above, it is illustrated that the wearable electronic device 1000 displays the second GUI on the sub-display area, but this should not be considered as limiting. For example, the wearable electronic device 1000 may display the second GUI by overlapping the second GUI over the first GUI displayed on the main display area. In addition, for example, the wearable electronic device 1000 may display the second GUI over the main display area and the sub-display area.

In the above, it is illustrated that the wearable electronic device 1000 additionally displays the second GUI, but this should not be considered as limiting. For example, the wearable electronic device 1000 may display the second GUI on behalf of the first GUI. In this case, the wearable electronic device 1000 may remove the first GUI and may display the second GUI on the main display area.

In the above, it is illustrated that the wearable electronic device 1000 displays the second GUI, but this should not be considered as limiting. The wearable electronic device 1000 may extend the first GUI and may display the extended first GUI on the main display area and at least a part of the sub-display area. In this case, the extended first GUI may contain more information than the first GUI before extension.

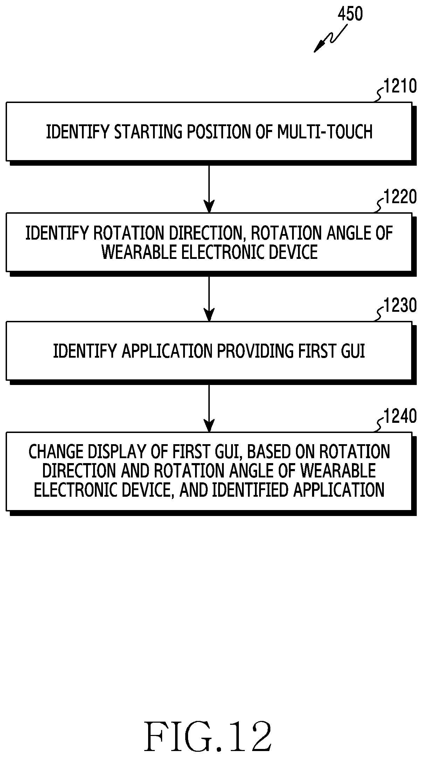

FIG. 12 is a flowchart of a method for changing the display of a first GUI by a wearable electronic device according to a user input to rotate the wearable electronic device according to an embodiment.

Operations 1210 to 1240 of FIG. 12 may correspond to operation 450 of FIG. 4.

In operation 1210, the wearable electronic device 1000 may identify a starting position of the multi-touch. Before the first touch and the second touch on the sub-display areas are moved, the wearable electronic device 1000 may identify a position of the first touch and a position of the second touch on the sub-display areas. For example, the starting position of the first touch may be within a partial area of the sub-display area that is within a predetermined distance range from the lower end of the main display. For example, the starting position of the second touch may be within a partial area of the sub-display area that is within a predetermined distance range from the upper end of the main display.

In operation 1220, the wearable electronic device 1000 may identify a rotation direction and a rotation angle of the wearable electronic device 1000. As the wearable electronic device 1000 is rotated while the touch state of the first touch and the second touch on the sub-display areas is being maintained, the wearable electronic device 1000 may detect the rotation of the wearable electronic device 1000 using a sensor within the wearable electronic device 1000. For example, the rotation direction of the wearable electronic device 1000 may include a clockwise direction and a counter clockwise direction with reference to a rotation axis (for example, the axis that user's forearm is pointing). For example, the rotation angle of the wearable electronic device 1000 may include an angle at which the wearable electronic device 1000 is rotated with reference to the rotation axis (for example, the axis that user's forearm is pointing).

In operation 1230, the wearable electronic device 1000 may identify an application providing the first GUI. The first GUI may be displayed on the main display area of the wearable electronic device 1000 by the application running in the wearable electronic device 1000, and the wearable electronic device 1000 may identify the application providing the first GUI.

In operation 1240, the wearable electronic device 1000 may change the display of the first GUI, based on the rotation direction and the rotation angle of the wearable electronic device 1000, and the identified application. As it is determined that the wearable electronic device 1000 is rotated while the second user input to move the multi-touch is being received, the wearable electronic device 1000 may change the display of the first GUI according to the rotation of the wearable electronic device 1000.

For example, the wearable electronic device 1000 may rotate the first GUI within the main display area and display the same. In this case, the wearable electronic device 1000 may determine a rotation angle of the first GUI according to the rotation direction and the rotation angle of the wearable electronic device 1000.

For example, the wearable electronic device 1000 may move the display position of the first GUI from the main display area to the sub-display area. In this case, the wearable electronic device 1000 may determine a movement direction and a movement distance of the first GUI according to the rotation direction and the rotation angle of the wearable electronic device 1000.

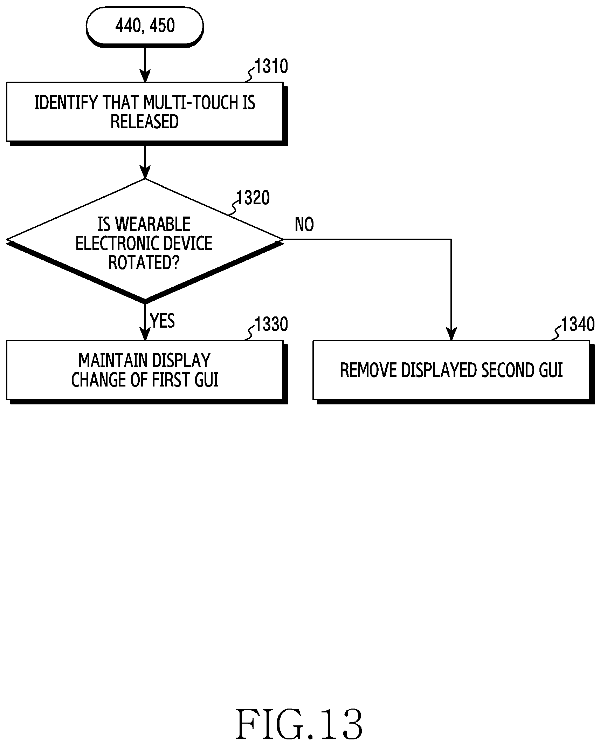

FIG. 13 is a flowchart of a method for displaying a GUI as a multi-touch on a wearable electronic device is released according to an embodiment.

Operations 1310 to 1340 of FIG. 13 may be performed after operation 440 or 450 of FIG. 4.

In operation 1310, the wearable electronic device 1000 may identify that the multi-touch is released. As user' fingers multi-touching the wearable electronic device 1000 are lifted from the wearable electronic device 1000, the multi-touch on the wearable electronic device 1000 may be released.

In operation 1320, the wearable electronic device 1000 may identify whether the wearable electronic device was rotated. The wearable electronic device 1000 may determine whether the wearable electronic device 1000 was rotated while the multi-touch was being moved. For example, the wearable electronic device 1000 may identify whether the wearable electronic device 1000 was rotated while the multi-touch was being moved, with reference to a result of determining in operation 430.

As it is determined that the wearable electronic device 1000 was not rotated while the multi-touch was being moved, the wearable electronic device 1000 may remove the displayed second GUI in operation 1340. The wearable electronic device 1000 may restore the display state of the wearable electronic device 1000 to the original state before the display of the second GUI. For example, the wearable electronic device 1000 may remove the display of the second GUI as in operation 440. For example, if the second GUI is additionally displayed with the first GUI being maintained, the wearable electronic device 1000 may remove the display of the second GUI. For example, if the second GUI is displayed on behalf of the first GUI, the wearable electronic device 1000 may remove the display of the second GUI and may display the first GUI.

As it is determined that the wearable electronic device 1000 was rotated while the multi-touch was being moved, the wearable electronic device 1000 may maintain the change of the display of the first GUI in operation 1330. For example, the wearable electronic device 1000 may maintain the change of the display of the first GUI as in operation 450.

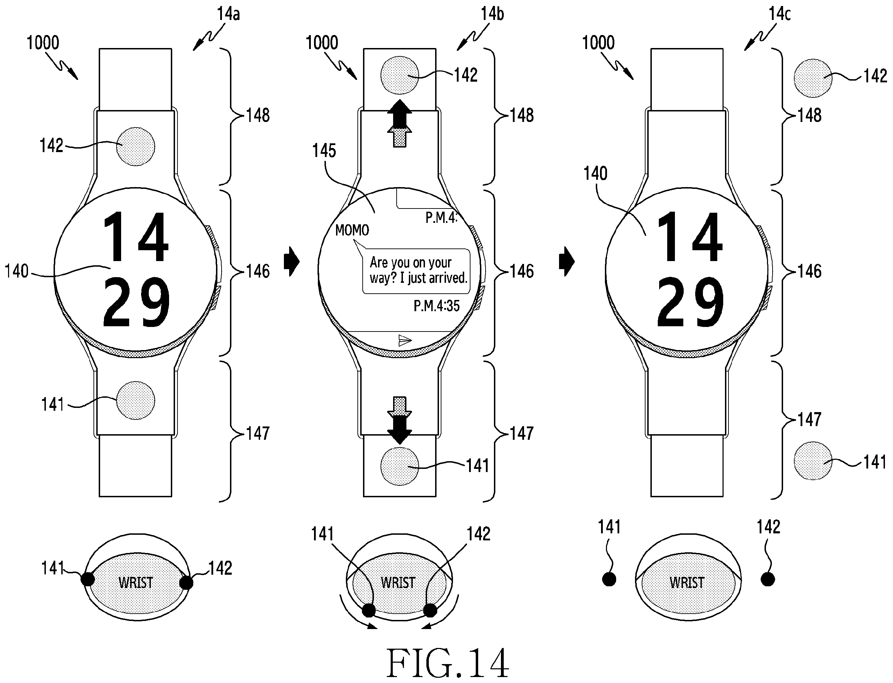

FIG. 14 is a view illustrating an example where, when a notification is generated in a wearable electronic device according to an embodiment, a first GUI of a watch application is changed to a second GUI of an application in which the notification is generated as a multi-touch on a sub-display area is moved.

Referring to identification number 14a of FIG. 14, a first GUI 140 of a watch application may be displayed in a main display area 146 of the wearable electronic device 1000, and a multi-touch input including a first touch 141 and a second touch 142 may be input to sub-display areas 147, 148 of the wearable electronic device 1000. The first GUI 140 may contain current time information provided by the watch application.

Referring to identification number 14b of FIG. 14, the first touch 141 and the second touch 142 may be moved. The position of the first touch 141 may be moved away from the main display area 146 while the touch state of the first touch 141 is being maintained, and the position of the second touch 142 may be moved away from the main display area 146 while the touch state of the second touch 142 is being maintained. In this case, the wearable electronic device 1000 may not be rotated.

According to an embodiment, as the first touch 141 and the second touch 142 are moved, the wearable electronic device 1000 may identify the movement of the multi-touch input on the sub-display areas 147, 148. Accordingly, the wearable electronic device 1000 may display a second GUI 145 containing notification information provided by a message application on the main display area 146. The second GUI 140 may contain a message received from the outside as a notification generated in the message application. The wearable electronic device 1000 may remove the first GUI 140 displayed on the main display area 146, and may display the second GUI 145 indicating messages received by the message application on the main display area 146.

Referring to identification number 14c of FIG. 14, the moved first touch 141 and second touch 142 may be released. As the first touch 141 and the second touch 142 are lifted from the sub-display areas 147, 148, the first touch 141 and the second touch 142 on the wearable electronic device 1000 may be released. As the moved first touch 141 and second touch 142 are released, the wearable electronic device 1000 may restore the display state of the main display 146 to the original state before the movement of the first touch 141 and the second touch 142. For example, the wearable electronic device may remove the second GUI 145 displayed on the main display area 146, and may display the first GUI 140 provided by the watch application on the main display area 146.

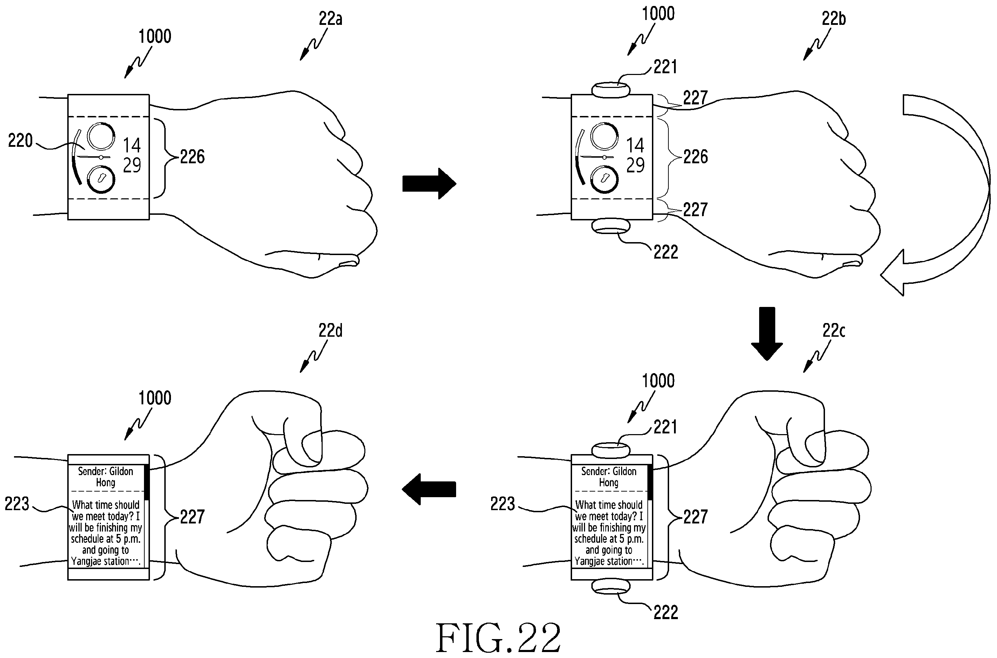

Meanwhile, referring to FIG. 22, when a notification is generated in the wearable electronic device 1000 according to an embodiment, the position of a multi-touch on a sub-display area 227 may be moved due to the rotation of the wearable electronic device 1000, such that a GUI of an application causing the notification may be displayed and fixed to the sub-display area 227.

Referring to identification number 22a of FIG. 22, a first GUI 220 of a watch application may be displayed on a main display area 226 of the wearable electronic device 1000, and the first GUI 220 may contain current time information provided by the watch application. The wearable electronic device 1000 may receive a message through a message application while displaying the first GUI 220 of the watch application on the main display area 226. According to an embodiment, as the message is received through the message application, a notification may be generated in the wearable electronic device 1000.

Referring to identification number 22b of FIG. 22, after the message is received through the message application, a multi-touch input including a first touch 221 and a second touch 222 may be inputted to some areas of the sub-display area 227 (for example, some areas close to the main display area 226) of the wearable electronic device 1000. As the forearm of the user of the wearable electronic device 1000 is rotated with the multi-touch input including the first touch 221 and the second touch 222 being maintained, the wearable electronic device 1000 may be rotated with reference to an axis corresponding to the user's forearm.

Referring to identification number 22c of FIG. 22, as the wearable electronic device 1000 is rotated with reference to the axis corresponding to the user's forearm, the touch positions of the first touch 221 and the second touch 222 may be moved, and the message 223 received by the message application may be displayed on the sub-display area 227 of the electronic device 1000 between the first touch 221 and the second touch 222.

Referring to identification number 22d of FIG. 22, the first touch 221 and the second touch 222 are terminated and the display of the message 223 may be fixed on the sub-display area 227.

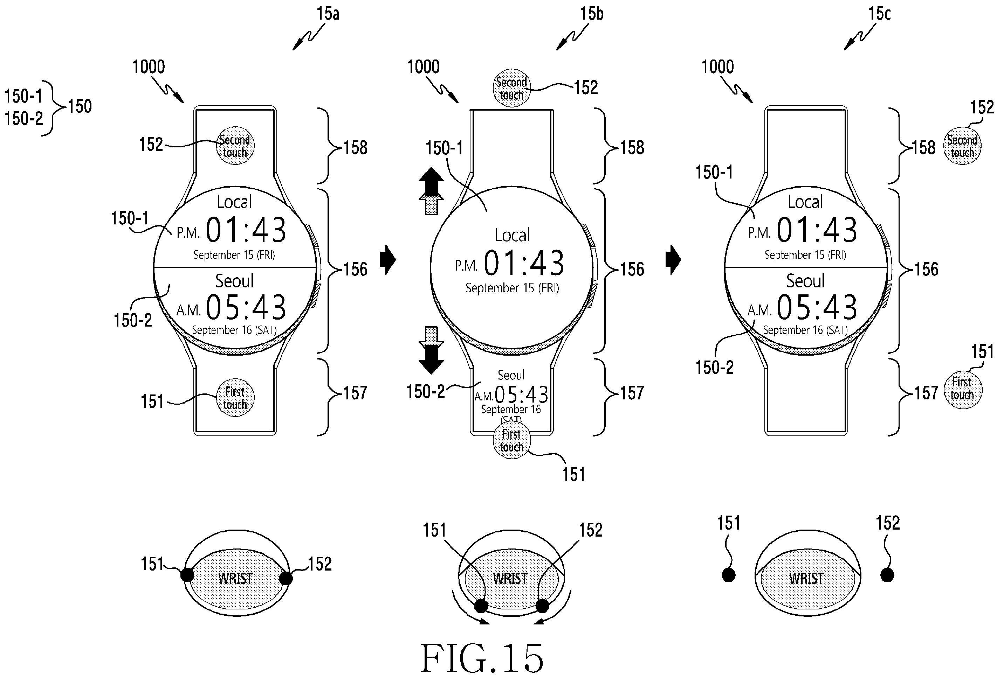

FIG. 15 is a view illustrating an example where a first GUI of a watch application is changed as a multi-touch on a sub-display area of a wearable electronic device is moved according to an embodiment.

Referring to identification number 15a of FIG. 15, a first GUI 150 of a watch application may be displayed on a main display area 156 of the wearable electronic device 1000, and a multi-touch input including a first touch 151 and a second touch 152 may be inputted to sub-display areas 157, 158 of the wearable electronic device 1000. The first GUI 150 may include an area 150-1 in which current local time information provided by the watch application is displayed, and an area 150-2 in which time information of a pre-set region is displayed.

Referring to identification number 15b of FIG. 15, the first touch 151 and the second touch 152 may be moved. The position of the first touch 151 may be moved away from the main display area 156 while the touch state of the first touch 151 is being maintained, and the position of the second touch 152 may be moved away from the main display area 156 while the touch state of the second touch 152 is being maintained. In this case, the wearable electronic device 1000 may not be rotated.

According to an embodiment, as the first touch 151 and the second touch 152 are moved, the wearable electronic device 1000 may identify the movement of the multi-touch input on the sub-display areas 157, 158. Accordingly, the wearable electronic device 1000 may extend the first GUI 150 and display the same. For example, the wearable electronic device 1000 may extend the area 150-1 in which the current local time information is displayed, and may display the extended area 150-1 on the main display area 156 of the wearable electronic device 1000. Furthermore, the wearable electronic device 1000 may display the area 150-2 in which the time information of the pre-set region is displayed on the sub-display area 157. In this case, the shape of the extended area 150-1 may be changed to fit the shape of the main display area 156, and the shape of the area 150-2 may be changed to fit the shape of the sub-display area 157.

Referring to identification number 15c of FIG. 15, the moved first touch 151 and second touch 152 may be released. As the first touch 151 and the second touch 152 are lifted from the sub-display areas 157, 158, the first touch 151 and the second touch 152 on the wearable electronic device 1000 may be released. As the moved first touch 151 and second touch 152 are released, the wearable electronic device 1000 may restore the display state of the main display 156 to the original state before the movement of the first touch 151 and the second touch 152. For example, the wearable electronic device 1000 may display the first GUI 150 including the area 150-1 in which the current local time information provided by the watch application is displayed, and the area 150-2 in which the time information of the pre-set region is displayed on the main display area 156.

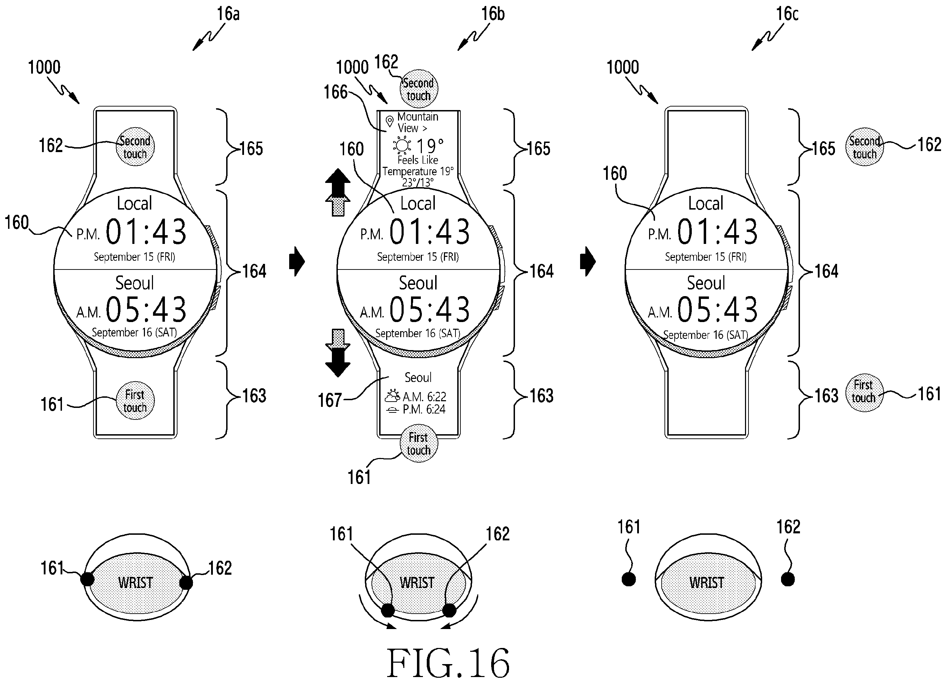

FIG. 16 is a view illustrating an example where a second GUI containing weather information is additionally displayed as a multi-touch on a sub-display area of a wearable electronic device is moved according to an embodiment.

Referring to identification number 16a of FIG. 16, a first GUI 160 of a watch application may be displayed on a main display area 164 of the wearable electronic device 1000, and a multi-touch input including a first touch 161 and a second touch 162 may be inputted to sub-display areas 163, 165 of the wearable electronic device 1000. The first GUI 160 may contain current local time information and time information of a pre-set region which are provided by the watch application.

Referring to identification number 16b of FIG. 16, the first touch 161 and the second touch 162 may be moved. The position of the first touch 161 may be moved away from the main display area 164 while the touch state of the first touch 161 is being maintained, and the position of the second touch 162 may be moved away from the main display area 164 while the touch state of the second touch 162 is being maintained. In this case, the wearable electronic device 1000 may not be rotated.

According to an embodiment, as the first touch 161 and the second touch 162 are moved, the wearable electronic device 1000 may identify the movement of the multi-touch input on the sub-display areas 163, 165. Accordingly, the wearable electronic device 1000 may additionally display a GUI 167 and a GUI 166 containing additional information related to the first GUI 160. For example, the wearable electronic device 1000 may display the GUI 166 containing current local weather information on the sub-display area 165 close to the portion displaying the current local time information. For example, the wearable electronic device 1000 may display the GUI 167 containing weather information of the pre-set region on the sub-display area 163 close to the portion displaying the time information of the pre-set region.

Referring to identification number 16c of FIG. 16, the moved first touch 161 and second touch 162 may be released. As the first touch 161 and the second touch 162 are lifted from the sub-display areas 163, 165, the touch 161 and the second touch 162 on the wearable electronic device 1000 may be released. As the moved first touch 161 and second touch 162 are released, the wearable electronic device 1000 may restore the display state of the main display area 164 to the original display state before the movement of the first touch 161 and the second touch 162. For example, the wearable electronic device 1000 may remove the GUI 167 and the GUI 166 displayed on the sub-display areas 163, 165.

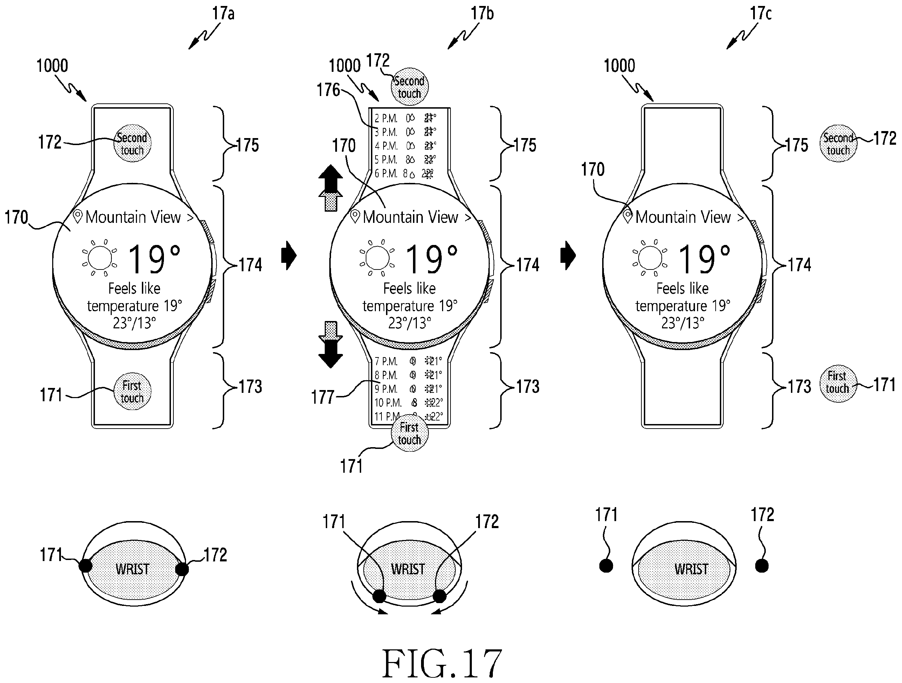

FIG. 17 is a view illustrating an example where a second GUI containing detailed weather information is additionally displayed for a first GUI of a weather application as a multi-touch on a sub-display area of a wearable electronic device is moved according to an embodiment.

Referring to identification number 17a of FIG. 17, a first GUI 170 of a weather application may be displayed on a main display area 174 of the wearable electronic device 1000, and a multi-touch input including a first touch 171 and a second touch 172 may be inputted to sub-display areas 173, 175 of the wearable electronic device 1000. The first GUI 170 may contain current local weather information provided by the weather application.

Referring to identification number 17b of FIG. 17, the first touch 171 and the second touch 172 may be moved. For example, the position of the first touch 171 may be moved away from the main display area 174 while the touch state of the first touch 171 is being maintained, and the position of the second touch 172 may be moved away from the main display area 174 while the touch state of the second touch 172 is being maintained. In this case, the wearable electronic device 1000 may not be rotated.

According to an embodiment, as the first touch 171 and the second touch 172 are moved, the wearable electronic device 1000 may identify the movement of the multi-touch input on the sub-display areas 173, 175. Accordingly, the wearable electronic device 1000 may additionally display a GUI 177 and a GUI 176 containing additional information related to the first GUI 170. For example, the wearable electronic device 1000 may have hourly weather information of the current region divided and contained in both the GUI 176 and the GUI 177. Furthermore, the wearable electronic device 1000 may additionally display the GUI 176 on the sub-display area 175, and may additionally display the GUI 177 on the sub-display area 173.

Referring to identification number 17c of FIG. 17, the moved first touch 171 and second touch 172 may be released. As the first touch 171 and the second touch 172 are lifted from the sub-display areas 173, 175, the touch 171 and the second touch 172 on the wearable electronic device 1000 may be released. As the moved first touch 171 and second touch 172 are released, the wearable electronic device 1000 may restore the display state of the main display area 174 to the original display state before the movement of the first touch 171 and the second touch 172. For example, the wearable electronic device 1000 may remove the GUI 177 and the GUI 176 displayed on the sub-display areas 173, 175.

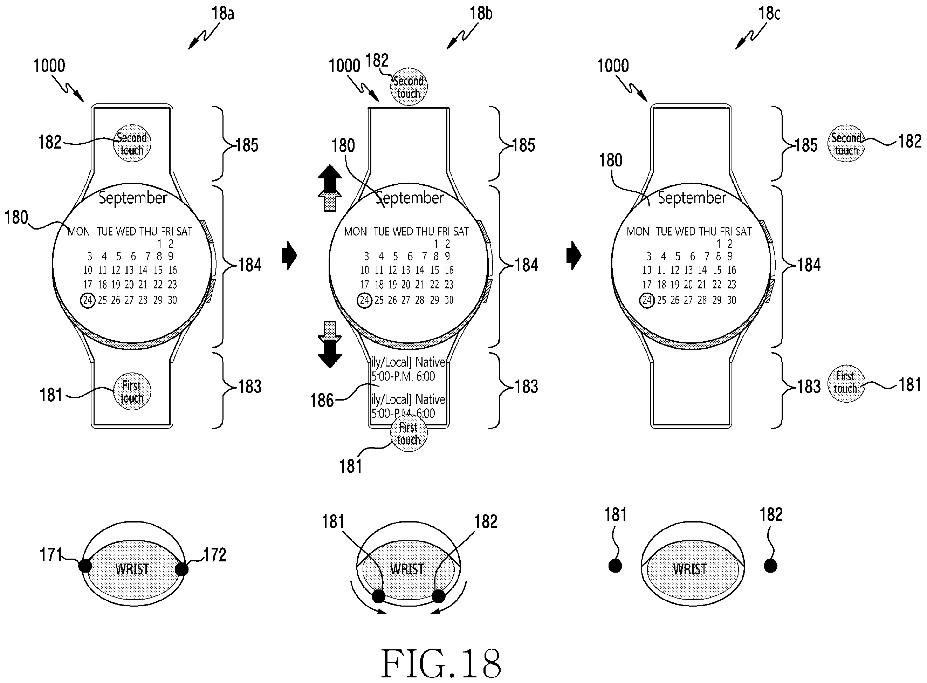

FIG. 18 is a view illustrating an example where a second GUI containing detailed schedule information is additionally displayed for a first GUI of a schedule application as a multi-touch on a sub-display area of a wearable electronic device is moved according to an embodiment.

Referring to identification number 18a of FIG. 18, a first GUI 180 of a schedule application may be displayed on a main display area 184 of the wearable electronic device 1000, and a multi-touch input including a first touch 181 and a second touch 182 may be inputted to sub-display areas 183, 185 of the wearable electronic device 1000. The first GUI 180 may contain a calendar screen provided by the schedule application.

Referring to identification number 18b of FIG. 18, the first touch 181 and the second touch 182 may be moved. For example, the position of the first touch 181 may be moved away from the main display area 184 while the touch state of the first touch 181 is being maintained, and the position of the second touch 182 may be moved away from the main display area 184 while the touch state of the second touch 182 is being maintained. In this case, the wearable electronic device 1000 may not be rotated.

According to an embodiment, as the first touch 181 and the second touch 182 are moved, the wearable electronic device 1000 may identify the movement of the multi-touch input on the sub-display areas 183, 185. Accordingly, the wearable electronic device 1000 may additionally display a GUI 186 containing additional information related to the first GUI 180. For example, the wearable electronic device 1000 may display the GUI 186 containing detailed information related to a schedule of a date selected on the calendar within the first GUI on the sub-display area 183.

Referring to identification number 18c of FIG. 18, the moved first touch 181 and second touch 182 may be released. As the first touch 181 and the second touch 182 are lifted from the sub-display areas 183, 185, the touch 181 and the second touch 182 on the wearable electronic device 1000 may be released. As the moved first touch 181 and second touch 182 are released, the wearable electronic device 1000 may restore the display state of the main display area 184 to the original display state before the movement of the first touch 181 and the second touch 182. For example, the wearable electronic device 1000 may remove the GUI 186 displayed on the sub-display area 183.

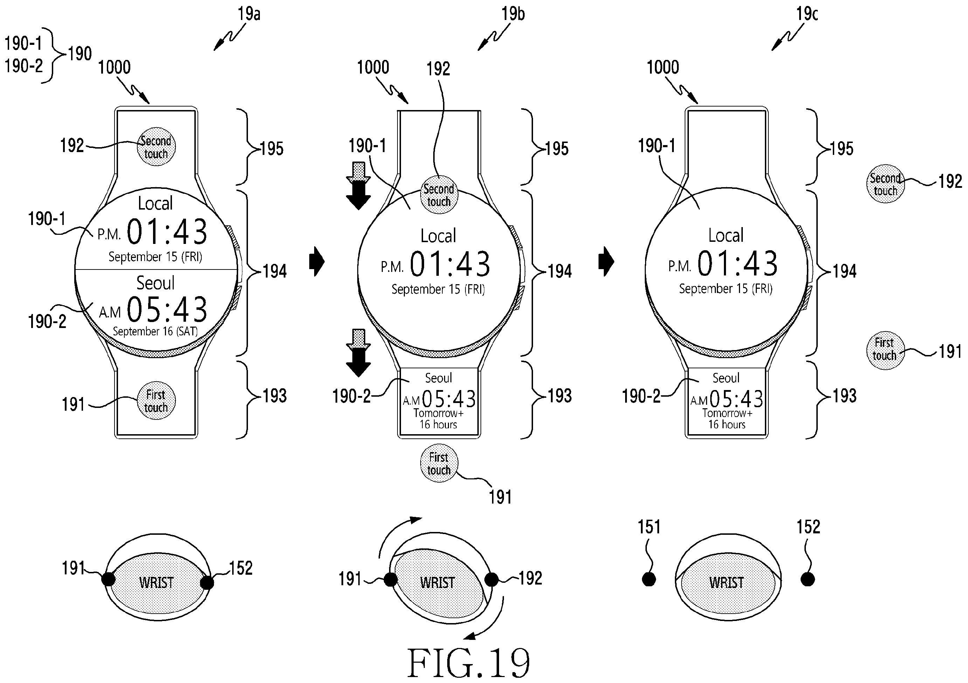

FIG. 19 is a view illustrating an example where a first GUI of a watch application is changed as a multi-touch on a sub-display area of a wearable electronic device is moved and the wearable electronic device is rotated, and the changed first GUI is maintained according to an embodiment.

Referring to identification number 19a of FIG. 19, a first GUI 190 of a watch application may be displayed on a main display area 194 of the wearable electronic device 1000, and a multi-touch input including a first touch 191 and a second touch 192 may be inputted to sub-display areas 193, 195 of the wearable electronic device 1000. The first GUI 190 may include an area 190-1 in which current local time information provided by the watch application is displayed, and an area 190-2 in which time information of a pre-set region is displayed.

Referring to identification number 19b of FIG. 19, as the wearable electronic device 1000 is rotated, the first touch 191 and the second touch 192 may be moved. The first touch 191 and the second touch 192 may be moved due to the rotation of the wearable electronic device 1000. For example, as the wearable electronic device 1000 is rotated, the position of the first touch 151 may be moved away from the main display area 156 due to the rotation of the wearable electronic device 1000, and the position of the second touch 192 may be moved from the sub-display area 195 toward the main display area 194.

According to an embodiment, as the first touch 191 and the second touch 192 are moved, the wearable electronic device 1000 may identify the rotation of the wearable electronic device 1000 while the multi-touch is being maintained. Accordingly, the wearable electronic device 1000 may extend the first GUI 190 and display the same. For example, the wearable electronic device 1000 may extend the area 190-1 in which the current local time information is displayed, and may display the extended area 190-1 on the main display area 194 of the wearable electronic device 1000. Furthermore, the wearable electronic device 1000 may display the area 190-2 in which the time information of the pre-set region is displayed on the sub-display area 193. In this case, the shape of the extended area 190-1 may be changed to fit the shape of the main display area 194, and the shape of the area 190-2 may be changed to fit the shape of the sub-display area 193.

Referring to identification number 19c of FIG. 19, the moved first touch 191 and second touch 192 may be released. As the first touch 191 is shifted from the sub-display area 193 and the second touch 192 is lifted from the main display area 194, the first touch 191 and the second touch 192 on the wearable electronic device 1000 may be released. Even when the moved first touch 191 and second touch 192 are released, the wearable electronic device 1000 may maintain the display state after the first touch 191 and the second touch 192 are moved. For example, the wearable electronic device 1000 may maintain the display state of the main display area 194 and the display state of the sub-display area 193 as shown in identification number 19b.

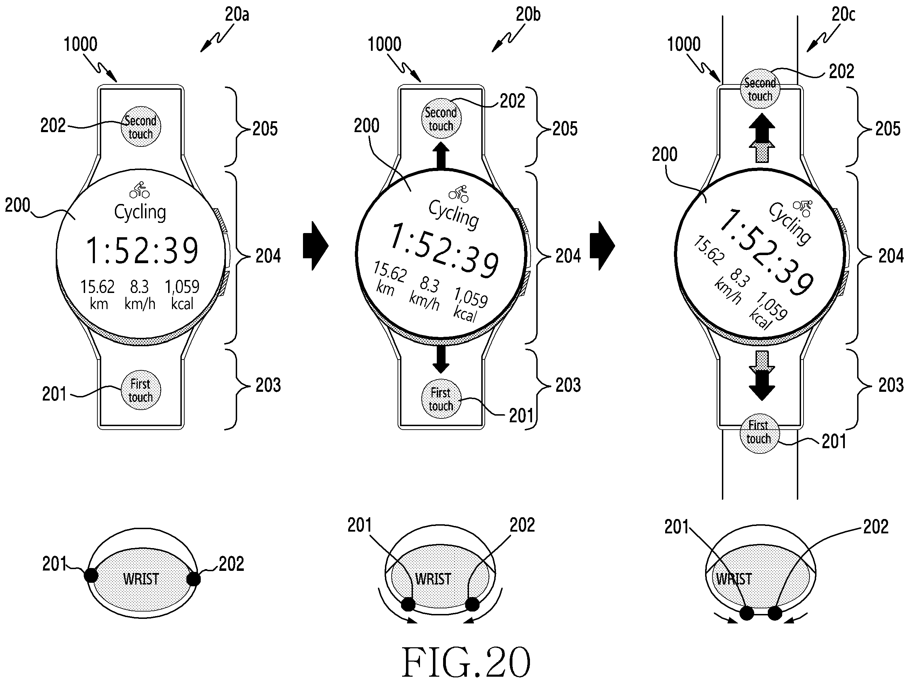

FIG. 20 is a view illustrating an example where a first GUI displayed on a wearable electronic device is rotated as a multi-touch on a sub-display area of the wearable electronic device is moved according to an embodiment.

Referring to identification number 20a of FIG. 20, a first GUI 200 of an application for guiding riding of a bicycle may be displayed on a main display area 204 of the wearable electronic device 1000, and a multi-touch input including a first touch 201 and a second touch 202 may be inputted to sub-display areas 203, 205 of the wearable electronic device 1000. The first GUI 200 may contain information on the bicycle riding (for example, riding time, riding distance, speed, and burned calories).

Referring to identification numbers 20b and 20c of FIG. 20, the first touch 201 and the second touch 202 may be moved. The position of the first touch 201 may be moved away from the main display area 204 while the touch state of the first touch 201 is being maintained, and the position of the second touch 202 may be moved away from the main display area 204 while the touch state of the second touch 202 is being maintained. In this case, the first touch 201 and the second touch 202 may be moved away from the main display area 204 without rotating the wearable electronic device 1000 with reference to a rotation axis (for example, an axis that the forearm is pointing).

According to an embodiment, as the first touch 201 and the second touch 202 are moved away from the main display area 204, the first GUI 200 displayed on the main display area 204 may be rotated. For example, as the first touch 201 and the second touch 202 are moved away from the main display area 204, the first GUI 200 displayed on the main display area 204 may be rotated in the clockwise direction. For example, as the first touch 201 and the second touch 202 are moved away from the main display area 204 close to each other, the first GUI 200 displayed on the main display area 204 may be rotated in the counter clockwise direction. However, the rotation direction of the first GUI 200 is not limited hereto.

According to an embodiment, as the first touch 201 and the second touch 202 are away from the main display area 204, the movement distance of the first touch and the movement distance of the second touch 202 may increase, In addition, as the movement distance of the first touch 201 and the movement distance of the second touch 202 increase, the rotation angle of the first GUI 200 displayed on the main display area 204 may increase.

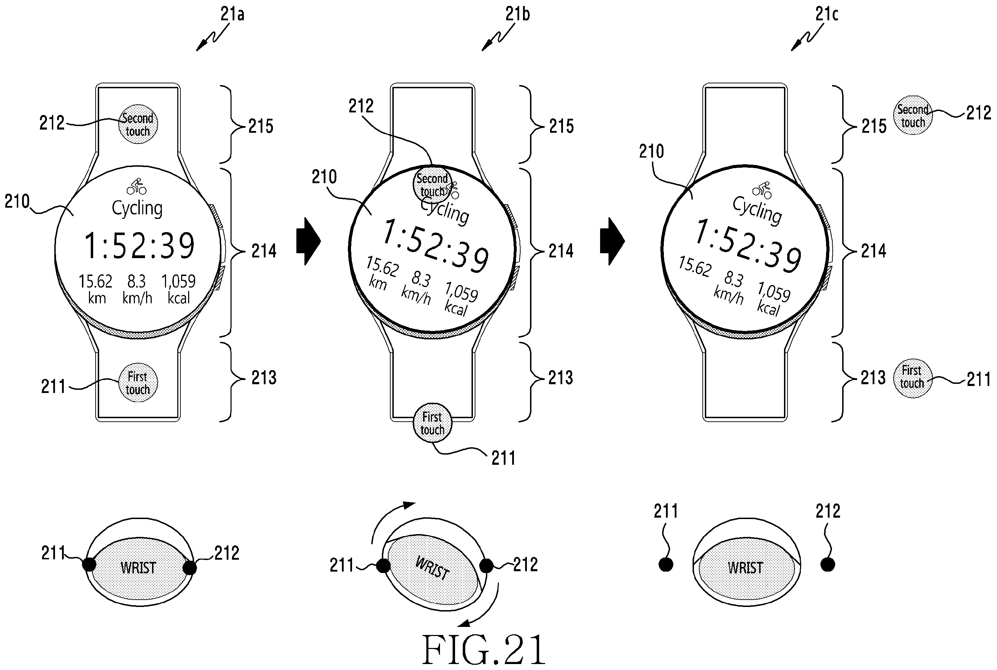

FIG. 21 is a view illustrating an example where a first GUI displayed on a wearable electronic device is rotated as a multi-touch on a sub-display area of the wearable electronic device is moved and the wearable electronic device is rotated, and the rotated first GUI is fixed according to an embodiment.

Referring to identification number 21a of FIG. 21, a first GUI 210 of an application for guiding riding of a bicycle may be displayed on a main display area 214 of the wearable electronic device 1000, and a multi-touch input including a first touch 211 and a second touch 212 may be inputted to sub-display areas 213, 215 of the wearable electronic device 1000. The first GUI 200 may contain information on the bicycle riding (for example, riding time, riding distance, speed, and burned calories).

Referring to identification numbers 21b of FIG. 21, as the wearable electronic device 1000 is rotated, the first touch 211 and the second touch 212 may be moved. The first touch 211 and the second touch 212 may be moved due to the rotation of the wearable electronic device 1000. For example, as the wearable electronic device 1000 is rotated, the position of the first touch 211 may be moved away from the main display area 214 due to the rotation of the wearable electronic device 1000, and the position of the second touch 212 may be moved from the sub-display area 215 toward the main display area 214.

According to an embodiment, as the first touch 211 and the second touch 212 are moved due to the rotation of the wearable electronic device 1000, the first GUI 210 displayed on the main display area 214 may be rotated. For example, as the position of the first touch 211 is moved away from the main display area 214 and the position of the second touch 212 is moved from the sub-display area 215 toward the main display area 214 due to the rotation of the wearable electronic device 1000, the first GUI 210 displayed on the main display area 214 may be rotated in the clockwise direction. However, the rotation direction of the first GUI 210 is not limited hereto.

According to an embodiment, as the amount of rotation of the wearable electronic device 1000 increases, the movement distance of the first touch 211 and the movement distance of the second touch 212 may increase. In addition, as the amount of rotation of the wearable electronic device 1000 increases, the rotation angle of the first GUI 210 displayed on the main display area 214 may increase.

Referring to identification number 21c of FIG. 21, the moved first touch 211 and second touch 212 may be released. As the first touch 211 is shifted from the sub-display area 213 and the second touch 212 is shifted from the main display area 214, the first touch 211 and the second touch 212 on the wearable electronic device 1000 may be released. Even when the moved first touch 211 and second touch 212 are released, the wearable electronic device 1000 may maintain the display state of the main display area 214 after the rotation of the wearable electronic device 100. For example, the wearable electronic device 1000 may maintain the display state of the rotated first GUI 210 as shown in identification number 21b.

According to an embodiment, a method for displaying a GUI by a wearable electronic device may include: displaying a first GUI on a main display area of the wearable electronic device (for example, operation 400); receiving a first user input comprising a multi-touch on a sub-display area corresponding to a band portion of the wearable electronic device (for example, operation 410); receiving a second user input to move the multi-touch while the multi-touch is being maintained (for example, operation 420); determining whether the wearable electronic device is rotated while the second user input is being received; when it is determined that the wearable electronic device is rotated, changing the display of the first GUI (for example, operation 450). Furthermore, the method may include, when it is determined that the wearable electronic device is not rotated, displaying a second GUI pre-set in relation to the first GUI on the sub-display area (for example, operation 440).

In addition, the sub-display area may include a first portion and a second portion which are spaced apart from each other by the main display area.

In addition, the multi-touch may include a first touch on the first portion of the sub-display area, and a second touch on the second portion of the sub-display area.

In addition, receiving the second user input to move the multi-touch may include receiving a user input to move at least one of the first touch or the second touch.

In addition, determining whether the wearable electronic device is rotated may include determining whether the wearable electronic device is rotated with reference to a pre-set axis due to rotation of the wrist of a user wearing the wearable electronic device.

In addition, determining whether the wearable electronic device is rotated may further include determining whether a rotation direction and an amount of rotation of the wearable electronic device correspond to a movement direction and a movement distance of the multi-touch, and changing the display of the first GUI may include changing the display of the first GUI as the rotation direction and the amount of rotation of the wearable electronic device correspond to the movement direction and the movement distance of the multi-touch.

In addition, changing the display of the first GUI may include moving a display position of the first GUI from the main display area to the sub-display area.

In addition, in the method, changing the display of the first GUI may include rotating and displaying the first GUI on the main display area.

In addition, the method may further include removing the second GUI displayed on the sub-display area as the multi-touch is released.

In addition, the method may further include maintaining the changed display of the first GUI displayed on the sub-display area as the multi-touch is released.

In addition, the first GUI may be provided by an application running in the wearable electronic device, and the display change of the first GUI and the second GUI may be pre-set for the application.

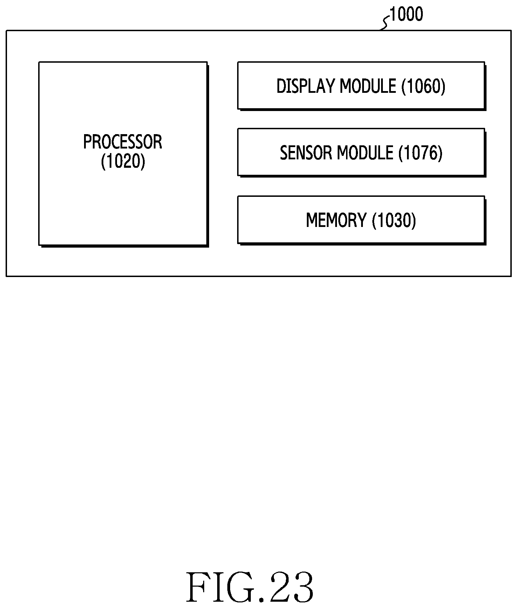

FIG. 23 is a block diagram of a wearable electronic device according to an embodiment.

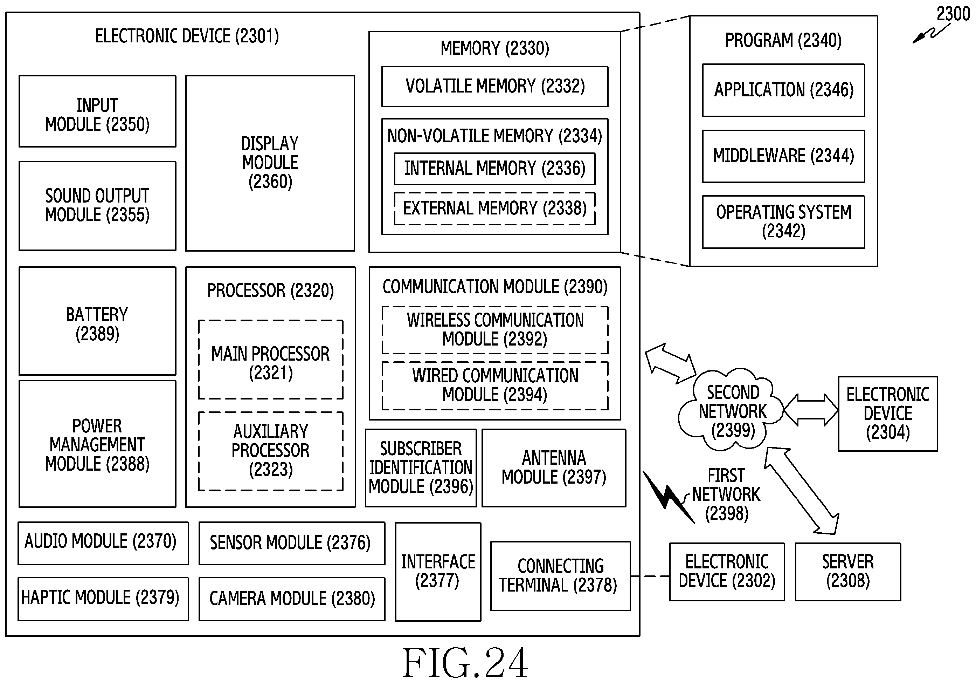

Referring to FIG. 23, the wearable electronic device 1000 according to an embodiment may include at least one processor 1020, a display module 1060, a sensor module 1076, and a memory 1030. The wearable electronic device 1000 may correspond to an electronic device 2301 of FIG. 24, which will be described later. The at least one processor 1020, the display module 1060, the sensor module 1076, and the memory 1030 of FIG. 23 may correspond to a processor 2320, a display module 2360, a sensor module 2376, and a memory 2330 of FIG. 24, respectively.

The processor 1020 may execute, for example, software to control at least one other component (e.g., a hardware or software component) of the wearable electronic device 1000 connected to the processor 1020, and may perform various data processing or computation. According to an embodiment, as at least a part of the data processing or computation, the processor 1020 may store a command or data received from another component (e.g., the sensor module 1076) in a volatile memory, may process a command or data stored in the volatile memory, and may store resulting data in a non-volatile memory. According to an embodiment, the processor 1020 may include a main processor (e.g., a central processing device or an application processor), or an auxiliary processor (e.g., a graphics processing device, a neural processing unit (NPU), an image signal processor, a sensor hub processor, or a communication processor) that is operable independently from, or in conjunction with, the main processor. For example, when the wearable electronic device 1000 includes the main processor and the auxiliary processor, the auxiliary processor may be set to consume lower power than the main processor, or to be specific to a designated function. The auxiliary processor may be implemented as separate from, or as part of the main processor.

The memory 1030 may store various data used by at least one component (e.g., the processor 1020 or the sensor module 1076) of the wearable electronic device 1000. The data may include, for example, software (e.g., the program) and input data or output data regarding a command related thereto. The memory 1030 may include a volatile memory or a non-volatile memory.

The display module 1060 may visually provide information to the outside (e.g., a user) of the wearable electronic device 1000. The display module 1060 may include, for example, a display, a hologram device, or a projector and a control circuitry to control a corresponding device. According to an embodiment, the display module 1060 may include a touch sensor set to detect a touch, or a pressure sensor set to measure the intensity of force generated by the touch. The display module 1060 may include one or more displays, and a main display area and one or more sub-display areas may be provided by the one or more displays.

The sensor module 1076 may detect an operational state (e.g., power or temperature) of the wearable electronic device 1000 or an environmental state (e.g., a state of a user) external to the wearable electronic device, and may generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

According to an embodiment, when instructions stored in the memory 1030 are executed by the at least one processor 1020, the instructions may cause the wearable electronic device 1000 to perform the operations of FIGS. 1 to 23.

According to an embodiment, the at least one processor 1020 may display a first GUI on a main display area (for example, the main display area 21 of FIG. 2, or the main display area 31 of FIG. 3). The at least one processor 1020 may display the first GUI that is provided by an application running in the wearable electronic device 1000 on the main display area. The application running in the wearable electronic device 1000 may include, for example, a watch application, a weather application, a schedule application, and a health application, but is not limited hereto. The application may include all kinds of applications executable by the wearable electronic device 1000.

According to an embodiment, the at least one processor 1020 may receive a first user input comprising a multi-touch on a sub-display area (for example, the sub-display areas 22, 23 of FIG. 2, or the sub-display area 32 of FIG. 3). The at least one processor 1020 may receive the first user input to touch a first portion and a second portion of the sub-display area simultaneously. The first user input may be a multi-touch input including a first touch on the first portion of the sub-display area and a second touch on the second portion of the sub-display area.

According to an embodiment, the first portion of the sub-display area and the second portion of the sub-display area may be portions that are spaced apart from each other by the main display area. For example, the first portion of the sub-display area may be a portion that is adjacent to a lower end of the main display area, and the second portion of the sub-display area may be a portion that is adjacent to an upper end of the main display area.

According to an embodiment, the at least one processor 1020 may receive a second user input to move the multi-touch. When the first user input is the multi-touch input including the first touch on the first portion of the sub-display area and the second touch on the second portion of the sub-display area, the at least one processor 1020 may receive the second user input to move at least one of the first touch or the second touch.

For example, the wearable electronic device 1000 may receive the second user input to move the first touch and the second touch. In this case, the wearable electronic device 1000 may acquire information on the movement of the first touch and the second touch. For example, the at least one processor 1020 may identify information on a starting position of the movement of the first touch, a movement direction of the first touch, a movement distance of the first touch, a starting position of the movement of the second touch, a movement direction of the second touch, a movement distance of the second touch.

For example, the wearable electronic device 1000 may receive the second user input to move the first touch out of the first touch and the second touch. In this case, the at least one processor 1020 may acquire information on the movement of the first touch. For example, the at least one processor 1020 may identify information on the starting position of the movement of the first touch, the movement direction of the first touch, and the movement distance of the first touch.

For example, the wearable electronic device 1000 may receive the second user input to move the second touch out of the first touch and the second touch. In this case, the at least one processor 1020 may acquire information on the movement of the second touch. For example, the at least one processor 1020 may identify information on the starting position of the movement of the second touch, the movement direction of the second touch, and the movement distance of the second touch.

In the above, it is illustrated that the first user input and the second user input are separate inputs for the convenience of explanation, but this should not be considered as limiting. The first user input and the second user input may be a single user input. For example, the wearable electronic device 1000 may recognize a multi-touch and an input to move the multi-touch as a single user input.

According to an embodiment, the at least one processor 1020 may determine whether the wearable electronic device 1000 is rotated. For example, when user's wrist wearing the wearable electronic device 1000 is rotated, the wearable electronic device 1000 may be rotated with reference to an axis corresponding to user's forearm. In this case, the at least one processor 1020 may detect the rotation of the wearable electronic device 1000 by controlling the sensor module 1076 in the wearable electronic device 1000, thereby acquiring information on the rotation of the wearable electronic device 1000. For example, the wearable electronic device 1000 may acquire information on a rotation direction and a rotation angle of the wearable electronic device 1000.

According to an embodiment, the at least one processor 1020 may determine whether the wearable electronic device 1000 is rotated while the multi-touch is moved. The at least one processor 1020 may determine whether the rotation of the wearable electronic device 1000 is detected while detecting the movement of the multi-touch.

According to an embodiment, the at least one processor 1020 may compare the information on the movement of the first touch and the second touch included in the multi-touch, and the information on the rotation of the wearable electronic device 1000. For example, the at least one processor 1020 may identify whether the movement of the multi-touch is caused by the rotation of the wearable electronic device 1000, or the movement of the multi-touch is unrelated to the rotation of the wearable electronic device 1000, based on the comparison.

According to an embodiment, as it is determined that the wearable electronic device 1000 is not rotated, the at least one processor 1020 may display a second GUI related to the first GUI on the sub-display area. As it is determined that the wearable electronic device 1000 is not rotated while the second user input to move the multi-touch is being received, the at least one processor 1020 may display the pre-set second GUI on the sub-display area according to the movement of the multi-touch.

According to an embodiment, the second GUI may be a GUI that is provided by the application providing the first GUI, and the second GUI related to the first GUI may be a pre-set GUI. In this case, the at least one processor 1020 may identify the second GUI related to the first GUI, by considering information on an identification value of the first GUI, an identification value of the application providing the first GUI, and the input to move the multi-touch. However, this should not be considered as limiting. The second GUI may be a GUI that is provided by a different application from the application providing the first GUI.

According to an embodiment, the at least one processor 1020 may display the second GUI on a portion of the sub-display area that is adjacent to the main display area. For example, the at least one processor 1020 may additionally display the second GUI on a portion of the sub-display area that is adjacent to an upper end of the main display area. For example, the at least one processor 1020 may additionally display the second GUI on a portion of the sub-display area that is adjacent to a lower end of the main display area.

In the above, it is illustrated that the at least one processor 1020 displays the second GUI on the sub-display area, but this should not be considered as limiting. For example, the at least one processor 1020 may display the second GUI by overlapping the second GUI over the first GUI displayed on the main display area. In addition, for example, the at least one processor 1020 may display the second GUI over the main display area and the sub-display area.

In the above, it is illustrated that the at least one processor 1020 additionally displays the second GUI, but this should not be considered as limiting. For example, the at least one processor 1020 may display the second GUI on behalf of the first GUI. In this case, the at least one processor 1020 may remove the first GUI and display the second GUI on the main display area.

In the above, it is illustrated that the at least one processor 1020 displays the second GUI, but this should not be considered as limiting. The at least one processor 1020 may extend the first GUI and may display the extended first GUI on the main display area and at least a part of the sub-display area. In this case, the extended first GUI may contain more information than the first GUI before extension.

According to an embodiment, as it is determined that the wearable electronic device 1000 is rotated, the at least one processor 1020 may change the display of the first GUI. As it is determined that the wearable electronic device 1000 is rotated while the second user input to move the multi-touch is being received, the at least one processor 1020 may change the display of the first GUI according to the rotation of the wearable electronic device 1000.

For example, the at least one processor 1020 may rotate the first GUI within the main display area and display the same. In this case, the at least one processor 1020 may determine a rotation angle of the first GUI according to the rotation direction and the rotation angle of the wearable electronic device 1000.

For example, the at least one processor 1020 may move the display position of the first GUI from the main display area to the sub-display area. In this case, the at least one processor 1020 may determine a movement direction and a movement distance of the first GUI according to the rotation direction and the rotation angle of the wearable electronic device 1000.

FIG. 24 is a block diagram illustrating an electronic device 2301 in a network environment 2300 according to various embodiments. Referring to FIG. 24, the electronic device 2301 in the network environment 2300 may communicate with an electronic device 2302 via a first network 2398 (e.g., a short-range wireless communication network), or at least one of an electronic device 2304 or a server 2308 via a second network 2399 (e.g., a long-range wireless communication network). According to an embodiment, the electronic device 2301 may communicate with the electronic device 2304 via the server 2308. According to an embodiment, the electronic device 2301 may include a processor 2320, memory 2330, an input module 2350, a sound output module 2355, a display module 2360, an audio module 2370, a sensor module 2376, an interface 2377, a connecting terminal 2378, a haptic module 2379, a camera module 2380, a power management module 2388, a battery 2389, a communication module 2390, a subscriber identification module(SIM) 2396, or an antenna module 2397. In some embodiments, at least one of the components (e.g., the connecting terminal 2378) may be omitted from the electronic device 2301, or one or more other components may be added in the electronic device 2301. In some embodiments, some of the components (e.g., the sensor module 2376, the camera module 2380, or the antenna module 2397) may be implemented as a single component (e.g., the display module 2360).

The processor 2320 may execute, for example, software (e.g., a program 2340) to control at least one other component (e.g., a hardware or software component) of the electronic device 2301 coupled with the processor 2320, and may perform various data processing or computation. According to one embodiment, as at least part of the data processing or computation, the processor 2320 may store a command or data received from another component (e.g., the sensor module 2376 or the communication module 2390) in volatile memory 2332, process the command or the data stored in the volatile memory 2332, and store resulting data in non-volatile memory 2334. According to an embodiment, the processor 2320 may include a main processor 2321 (e.g., a central processing unit (CPU) or an application processor (AP)), or an auxiliary processor 2323 (e.g., a graphics processing unit (GPU), a neural processing unit (NPU), an image signal processor (ISP), a sensor hub processor, or a communication processor (CP)) that is operable independently from, or in conjunction with, the main processor 2321. For example, when the electronic device 2301 includes the main processor 2321 and the auxiliary processor 2323, the auxiliary processor 2323 may be adapted to consume less power than the main processor 2321, or to be specific to a specified function. The auxiliary processor 2323 may be implemented as separate from, or as part of the main processor 2321.

The auxiliary processor 2323 may control at least some of functions or states related to at least one component (e.g., the display module 2360, the sensor module 2376, or the communication module 2390) among the components of the electronic device 2301, instead of the main processor 2321 while the main processor 2321 is in an inactive (e.g., sleep) state, or together with the main processor 2321 while the main processor 2321 is in an active state (e.g., executing an application). According to an embodiment, the auxiliary processor 2323 (e.g., an image signal processor or a communication processor) may be implemented as part of another component (e.g., the camera module 2380 or the communication module 2390) functionally related to the auxiliary processor 2323. According to an embodiment, the auxiliary processor 2323 (e.g., the neural processing unit) may include a hardware structure specified for artificial intelligence model processing. An artificial intelligence model may be generated by machine learning. Such learning may be performed, e.g., by the electronic device 2301 where the artificial intelligence is performed or via a separate server (e.g., the server 2308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2330 may store various data used by at least one component (e.g., the processor 2320 or the sensor module 2376) of the electronic device 2301. The various data may include, for example, software (e.g., the program 2340) and input data or output data for a command related thereto. The memory 2330 may include the volatile memory 2332 or the non-volatile memory 2334.

The program 2340 may be stored in the memory 2330 as software, and may include, for example, an operating system (OS) 2342, middleware 2344, or an application 2346.

The input module 2350 may receive a command or data to be used by another component (e.g., the processor 2320) of the electronic device 2301, from the outside (e.g., a user) of the electronic device 2301. The input module 2350 may include, for example, a microphone, a mouse, a keyboard, a key (e.g., a button), or a digital pen (e.g., a stylus pen).

The sound output module 2355 may output sound signals to the outside of the electronic device 2301. The sound output module 2355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2360 may visually provide information to the outside (e.g., a user) of the electronic device 2301. The display module 2360 may include, for example, a display, a hologram device, or a projector and control circuitry to control a corresponding one of the display, hologram device, and projector. According to an embodiment, the display module 2360 may include a touch sensor adapted to detect a touch, or a pressure sensor adapted to measure the intensity of force incurred by the touch.

The audio module 2370 may convert a sound into an electrical signal and vice versa. According to an embodiment, the audio module 2370 may obtain the sound via the input module 2350, or output the sound via the sound output module 2355 or a headphone of an external electronic device (e.g., an electronic device 2302) directly (e.g., wiredly) or wirelessly coupled with the electronic device 2301.

The sensor module 2376 may detect an operational state (e.g., power or temperature) of the electronic device 2301 or an environmental state (e.g., a state of a user) external to the electronic device 2301, and then generate an electrical signal or data value corresponding to the detected state. According to an embodiment, the sensor module 2376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2377 may support one or more specified protocols to be used for the electronic device 2301 to be coupled with the external electronic device (e.g., the electronic device 2302) directly (e.g., wiredly) or wirelessly. According to an embodiment, the interface 2377 may include, for example, a high definition multimedia interface (HDMI), a universal serial bus (USB) interface, a secure digital (SD) card interface, or an audio interface.

A connecting terminal 2378 may include a connector via which the electronic device 2301 may be physically connected with the external electronic device (e.g., the electronic device 2302). According to an embodiment, the connecting terminal 2378 may include, for example, a HDMI connector, a USB connector, a SD card connector, or an audio connector (e.g., a headphone connector).

The haptic module 2379 may convert an electrical signal into a mechanical stimulus (e.g., a vibration or a movement) or electrical stimulus which may be recognized by a user via his tactile sensation or kinesthetic sensation. According to an embodiment, the haptic module 2379 may include, for example, a motor, a piezoelectric element, or an electric stimulator.

The camera module 2380 may capture a still image or moving images. According to an embodiment, the camera module 2380 may include one or more lenses, image sensors, image signal processors, or flashes.

The power management module 2388 may manage power supplied to the electronic device 2301. According to one embodiment, the power management module 2388 may be implemented as at least part of, for example, a power management integrated circuit (PMIC).

The battery 2389 may supply power to at least one component of the electronic device 2301. According to an embodiment, the battery 2389 may include, for example, a primary cell which is not rechargeable, a secondary cell which is rechargeable, or a fuel cell.

The communication module 2390 may support establishing a direct (e.g., wired) communication channel or a wireless communication channel between the electronic device 2301 and the external electronic device (e.g., the electronic device 2302, the electronic device 2304, or the server 2308) and performing communication via the established communication channel. The communication module 2390 may include one or more communication processors that are operable independently from the processor 2320 (e.g., the application processor (AP)) and supports a direct (e.g., wired) communication or a wireless communication. According to an embodiment, the communication module 2390 may include a wireless communication module 2392 (e.g., a cellular communication module, a short-range wireless communication module, or a global navigation satellite system (GNSS) communication module) or a wired communication module 2394 (e.g., a local area network (LAN) communication module or a power line communication (PLC) module). A corresponding one of these communication modules may communicate with the external electronic device via the first network 2398 (e.g., a short-range communication network, such as Bluetooth^{™}, wireless-fidelity (Wi-Fi) direct, or infrared data association (IrDA)) or the second network 2399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2392 may identify and authenticate the electronic device 2301 in a communication network, such as the first network 2398 or the second network 2399, using subscriber information (e.g., international mobile subscriber identity (IMSI)) stored in the subscriber identification module 2396.

The wireless communication module 2392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2392 may support a high-frequency band (e.g., the mmWave band) to achieve, e.g., a high data transmission rate. The wireless communication module 2392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2392 may support various requirements specified in the electronic device 2301, an external electronic device (e.g., the electronic device 2304), or a network system (e.g., the second network 2399). According to an embodiment, the wireless communication module 2392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2397 may transmit or receive a signal or power to or from the outside (e.g., the external electronic device) of the electronic device 2301. According to an embodiment, the antenna module 2397 may include an antenna including a radiating element composed of a conductive material or a conductive pattern formed in or on a substrate (e.g., a printed circuit board (PCB)). According to an embodiment, the antenna module 2397 may include a plurality of antennas (e.g., array antennas). In such a case, at least one antenna appropriate for a communication scheme used in the communication network, such as the first network 2398 or the second network 2399, may be selected, for example, by the communication module 2390 (e.g., the wireless communication module 2392) from the plurality of antennas. The signal or the power may then be transmitted or received between the communication module 2390 and the external electronic device via the selected at least one antenna. According to an embodiment, another component (e.g., a radio frequency integrated circuit (RFIC)) other than the radiating element may be additionally formed as part of the antenna module 2397.

According to various embodiments, the antenna module 2397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2301 and the external electronic device 2304 via the server 2308 coupled with the second network 2399. Each of the electronic devices 2302 or 2304 may be a device of a same type as, or a different type, from the electronic device 2301. According to an embodiment, all or some of operations to be executed at the electronic device 2301 may be executed at one or more of the external electronic devices 2302, 2304, or 2308. For example, if the electronic device 2301 should perform a function or a service automatically, or in response to a request from a user or another device, the electronic device 2301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2301. The electronic device 2301 may provide the outcome, with or without further processing of the outcome, as at least part of a reply to the request. To that end, a cloud computing, distributed computing, mobile edge computing (MEC), or client-server computing technology may be used, for example. The electronic device 2301 may provide ultra low-latency services using, e.g., distributed computing or mobile edge computing. In another embodiment, the external electronic device 2304 may include an internet-of-things (IoT) device. The server 2308 may be an intelligent server using machine learning and/or a neural network. According to an embodiment, the external electronic device 2304 or the server 2308 may be included in the second network 2399. The electronic device 2301 may be applied to intelligent services (e.g., smart home, smart city, smart car, or healthcare) based on 5G communication technology or IoT-related technology.

The electronic device 2301 of FIG. 24 may correspond to the wearable electronic device 1000 of FIGS. 1 to 23, and, when instructions stored in the memory 2330 of the electronic device 2301 are executed by the processor 2320, the instructions may cause the electronic device 2301 to perform the operations of the wearable electronic device 1000 of FIGS. 1 to 23.

According to an embodiment, a wearable electronic device may include: one or more displays (for example, 1060, 2360) configured to provide a main display area and a sub-display area; one or more sensors (for example, 1076, 2376); a memory (for example, 1030, 1076) configured to store instructions; and one or more processors (for example, 1020, 2320), and, when executed by the one or more processors, the instructions stored in the memory may cause the wearable electronic device to: display a first GUI on the main display area of the wearable electronic device; receive a first user input comprising a multi-touch on the sub-display area corresponding to a band portion of the wearable electronic device; receive a second user input to move the multi-touch while the multi-touch is being maintained; control the one or more sensors to determine whether the wearable electronic device is rotated while the second user input is being received; and, when it is determined that the wearable electronic device is rotated, change the display of the first GUI. Furthermore, when it is determined that the wearable electronic device is not rotated, the instructions may cause the wearable electronic device to display a second GUI pre-set in relation to the first GUI on the sub-display area.

In addition, the sub-display area may include a first portion and a second portion which are spaced apart from each other by the main display area.

In addition, the multi-touch may include a first touch on the first portion of the sub-display area, and a second touch on the second portion of the sub-display area.

In addition, when executed by the one or more processors, the instructions stored in the memory may cause the wearable electronic device to receive a user input to move at least one of the first touch or the second touch.

In addition, when executed by the one or more processors, the instructions stored in the memory may cause the wearable electronic device to determine whether the wearable electronic device is rotated with reference to a pre-set axis due to rotation of the wrist of a user wearing the wearable electronic device.

In addition, when executed by the one or more processors, the instructions stored in the memory may cause the wearable electronic device to: determine whether a rotation direction and an amount of rotation of the wearable electronic device correspond to a movement direction and a movement distance of the multi-touch; and change the display of the first GUI as the rotation direction and the amount of rotation of the wearable electronic device correspond to the movement direction and the movement distance of the multi-touch.

In addition, when executed by the one or more processors, the instructions stored in the memory may cause the wearable electronic device to move a display position of the first GUI from the main display area to the sub-display area.

In addition, when executed by the one or more processors, the instructions stored in the memory may cause the wearable electronic device to rotate and display the first GUI on the main display area.

In addition, when executed by the one or more processors, the instructions stored in the memory may cause the wearable electronic device to remove the second GUI displayed on the sub-display area as the multi-touch is released.

In addition, when executed by the one or more processors, the instructions stored in the memory may cause the wearable electronic device to maintain the changed display of the first GUI displayed on the sub-display area as the multi-touch is released.

According to an embodiment, there may be provided a computer-readable recording medium which has a program recorded thereon to execute a method for displaying a GUI, the method including: displaying a first GUI on a main display area of the wearable electronic device; receiving a first user input comprising a multi-touch on a sub-display area corresponding to a band portion of the wearable electronic device; receiving a second user input to move the multi-touch while the multi-touch is being maintained; determining whether the wearable electronic device is rotated while the second user input is being received; when it is determined that the wearable electronic device is rotated, changing the display of the first GUI; and when it is determined that the wearable electronic device is not rotated, displaying a second GUI pre-set in relation to the first GUI on the sub-display area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2340) including one or more instructions that are stored in a storage medium (e.g., internal memory 2336 or external memory 2338) that is readable by a machine (e.g., the electronic device 2301). For example, a processor (e.g., the processor 2320) of the machine (e.g., the electronic device 2301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for displaying a GUI by a wearable electronic device, the method comprising:
displaying a first GUI on a main display area of the wearable electronic device;
receiving a first user input comprising a multi-touch on a sub-display area corresponding to a band portion of the wearable electronic device;
receiving a second user input to move the multi-touch while the multi-touch is being maintained;
determining whether the wearable electronic device is rotated while the second user input is being received;
when it is determined that the wearable electronic device is rotated, changing the display of the first GUI; and
when it is determined that the wearable electronic device is not rotated, displaying a second GUI pre-set in relation to the first GUI on the sub-display area.

2. The method of claim 1, wherein the sub-display area comprises a first portion and a second portion which are spaced apart from each other by the main display area, and
wherein the multi-touch comprises a first touch on the first portion of the sub-display area, and a second touch on the second portion of the sub-display area.

3. The method of claim 2, wherein receiving the second user input to move the multi-touch comprises receiving a user input to move at least one of the first touch or the second touch.

4. The method of any one of claim 1 to 2, wherein determining whether the wearable electronic device is rotated comprises determining whether the wearable electronic device is rotated with reference to a pre-set axis due to rotation of a wrist of the user wearing the wearable electronic device.

5. The method of any one of claim 1, 2 or 4, wherein determining whether the wearable electronic device is rotated further comprises determining whether a rotation direction and an amount of rotation of the wearable electronic device correspond to a movement direction and a movement distance of the multi-touch, and
wherein changing the display of the first GUI comprises changing the display of the first GUI as the rotation direction and the amount of rotation of the wearable electronic device correspond to the movement direction and the movement distance of the multi-touch.

6. The method of any one of claim 1, 2, 4, or 5, wherein changing the display of the first GUI comprises moving a display position of the first GUI from the main display area to the sub-display area.

7. The method of any one of claim 1, 2, 4, 5, or 6, wherein changing the display of the first GUI comprises rotating and displaying the first GUI on the main display area.

8. The method of any one of claim 1, 2, 4, 5, 6, or 7, further comprising removing the second GUI displayed on the sub-display area as the multi-touch is released.

9. The method of any one of claim 1, 2, 4, 5, 6, 7, or 8, further comprising maintaining a changed display of the first GUI displayed on the sub-display area as the multi-touch is released.

10. The method of claim 1, wherein the first GUI is provided by an application running in the wearable electronic device, and
wherein a display change of the first GUI and the second GUI are pre-set for the application.

11. A wearable electronic device comprising:
one or more displays configured to provide a main display area and a sub-display area;
one or more sensors;
a memory configured to store instructions; and
one or more processors,
wherein, when executed by the one or more processors, the instructions stored in the memory cause the wearable electronic device to:
display a first GUI on the main display area of the wearable electronic device;
receive a first user input comprising a multi-touch on the sub-display area corresponding to a band portion of the wearable electronic device;
receive a second user input to move the multi-touch while the multi-touch is being maintained;
control the one or more sensors to determine whether the wearable electronic device is rotated while the second user input is being received;
when it is determined that the wearable electronic device is rotated, change the display of the first GUI; and
when it is determined that the wearable electronic device is not rotated, display a second GUI pre-set in relation to the first GUI on the sub-display area.

12. The wearable electronic device of claim 11, wherein the sub-display area comprises a first portion and a second portion which are spaced apart from each other by the main display area, and
wherein the multi-touch comprises a first touch on the first portion of the sub-display area, and a second touch on the second portion of the sub-display area.

13. The wearable electronic device of any one of claim 11 to 12, wherein, when executed by the one or more processors, the instructions stored in the memory cause the wearable electronic device to determine whether the wearable electronic device is rotated with reference to a pre-set axis due to rotation of a wrist of the user wearing the wearable electronic device.

14. The wearable electronic device of any one of claim 11, 12 or 13, wherein, when executed by the one or more processors, the instructions stored in the memory cause the wearable electronic device to:
determine whether a rotation direction and an amount of rotation of the wearable electronic device correspond to a movement direction and a movement distance of the multi-touch; and
change the display of the first GUI as the rotation direction and the amount of rotation of the wearable electronic device correspond to the movement direction and the movement distance of the multi-touch.

15. The wearable electronic device of any one of claim 11, 12, 13, or 14, wherein, when executed by the one or more processors, the instructions stored in the memory cause the wearable electronic device to remove the second GUI displayed on the sub-display area as the multi-touch is released.
